(19) Europäisches Patentamt
European Patent Office
Office européen des brevets

(11) **EP 3 985 331 B1**

(12) **EUROPEAN PATENT SPECIFICATION**

(45) Date of publication and mention
of the grant of the patent:
**20.09.2023 Bulletin 2023/38**

(21) Application number: **20822389.1**

(22) Date of filing: **09.06.2020**

(51) International Patent Classification (IPC):
**F25B 49/02** *(2006.01)*  **F24F 11/36** *(2018.01)*

(52) Cooperative Patent Classification (CPC):
**F25B 49/005; F25B 13/00; F25B 41/24;**
F25B 2313/0233; F25B 2313/0315; F25B 2400/12;
F25B 2400/13; F25B 2500/222; F25B 2600/2513;
F25B 2600/2515; F25B 2600/2519;
F25B 2700/1931; F25B 2700/1933;
F25B 2700/21152

(86) International application number:
**PCT/JP2020/022690**

(87) International publication number:
**WO 2020/250889 (17.12.2020 Gazette 2020/51)**

(54) **REFRIGERATION CYCLE DEVICE**

KÄLTEKREISLAUFVORRICHTUNG

DISPOSITIF À CYCLE FRIGORIFIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2019 JP 2019111466**

(43) Date of publication of application:
**20.04.2022 Bulletin 2022/16**

(73) Proprietor: **Daikin Industries, Ltd.
Osaka-shi, Osaka 530-0001 (JP)**

(72) Inventor: **YAJIMA, Ryuuzaburou
Osaka 530-8323 (JP)**

(74) Representative: **Hoffmann Eitle
Patent- und Rechtsanwälte PartmbB
Arabellastraße 30
81925 München (DE)**

(56) References cited:
**EP-A1- 2 546 588         EP-A1- 2 631 571
WO-A1-2018/116404    WO-A1-2018/167811
JP-A- 2015 075 272      JP-A- 2018 112 350
JP-A- 2020 122 645      US-A1- 2015 233 622**

**Description**

**TECHNICAL FIELD**

The present invention relates to a refrigerant cycle apparatus.

**BACKGROUND ART**

In "guideline of design construction for ensuring safety against refrigerant leakage from commercial air conditioners using mild flammability (A2L) refrigerants (JRA GL-16: 2017)", which is a guideline of The Japan Refrigeration and Air Conditioning Industry Association issued on September 1, 2017, "Annex A (Prescription) Specifications of safety cutoff valves" is prepared, and a predetermined specification should be satisfied. One of the specifications of the safety cutoff valves to be satisfied is a closed valve leakage rate. Specifically, when fluid is air and a differential pressure between upstream and downstream of the safety cutoff valve is 1 MPa, 300 ($cm^3$/min) or less is prescribed as the closed valve leakage rate to be satisfied by the safety cutoff valve.

An example of a previously known refrigerant cycle apparatus is derivable from EP 2 631 571 A1, which forms basis for the two-part form of independent claim 1.

**SUMMARY OF THE INVENTION**

<Technical Problem>

The guideline prescribes that, a safety cutoff valve adopted as a safety measure should be disposed at an appropriate position in a refrigerant circuit to be cut off such that a target living room (room) upon refrigerant leakage has a refrigerant leakage maximum concentration equal to or less than one fourth of a lower flammability limit (LFL). Further, the guideline also prescribes that the refrigerant circuit should be cut off in accordance with a signal from a detector configured to detect refrigerant leakage.

The safety cutoff valve is configured to cut off a refrigerant leaking from a refrigerant circuit into a refrigerant leakage space upon refrigerant leakage. The LFL is a minimum refrigerant concentration specified by ISO 817 and enabling flame propagation in a state where a refrigerant and air are mixed uniformly. The refrigerant leakage maximum concentration is obtained by dividing total refrigerant quantity in a refrigerant circuit by a capacity of a space reserving the refrigerant (a value obtained by multiplying a leakage height by a floor area).

In the guideline, regardless of whether the safety cutoff valve is a gas side safety cutoff valve (hereinafter, a gas-side cutoff valve) or a liquid side safety cutoff valve (hereinafter, a liquid-side cutoff valve), it is required to suppress a closed valve leakage rate to the same leakage rate or less. In general, a gas-refrigerant connection pipe has a larger pipe diameter and a larger gas-side cutoff valve diameter than those of a liquid-refrigerant connection pipe, and thus, when it is assumed that a clearance of a seal portion is uniform, a circumferential length of the seal portion is long. Therefore, a clearance area increases. Accordingly, in a case where an air differential pressure between upstream and downstream is the same, the closed valve leakage rate tends to be higher in the gas-side cutoff valve than in the liquid-side cutoff valve. In order to satisfy the requirement of the guideline, it is necessary to reduce the valve clearance of the gas-side cutoff valve, and thus there is a problem that a manufacturing cost or a purchase cost of the gas-side cutoff valve increases.

<Solution to Problem>

Said problems are solved by means of a refrigerant cycle apparatus according to independent claim 1. Distinct embodiments are derivable from the dependent claims.

A refrigerant cycle apparatus according to a first aspect of the present disclosure is a refrigerant cycle apparatus that circulates a flammable refrigerant in a refrigerant circuit. The refrigerant cycle apparatus includes a gas-side cutoff valve, a liquid-side cutoff valve, a detection unit, and a control unit. The gas-side cutoff valve and the liquid-side cutoff valve are provided on opposite sides of a first portion of the refrigerant circuit. The detection unit detects refrigerant leakage from the first portion into a predetermined space. The control unit brings the gas-side cutoff valve and the liquid-side cutoff valve into a cutoff state when the detection unit detects the refrigerant leakage from the first portion into the predetermined space. Cutoff leakage rates at the gas-side cutoff valve and the liquid-side cutoff valve are leakage rates of gas that is in a single gas phase in a standard state at the gas-side cutoff valve and the liquid-side cutoff valve when a differential pressure between upstream and downstream of each of the gas-side cutoff valve and the liquid-side cutoff valve in the cutoff state is a predetermined pressure. The cutoff leakage rate at the gas-side cutoff valve is higher than the cutoff leakage rate at the liquid-side cutoff valve. The cutoff leakage rate is synonymous with a closed valve leakage rate according to the guideline.

In the refrigerant cycle apparatus, a density of the refrigerant to be cut off is different between the gas-side cutoff valve and the liquid-side cutoff valve. The gas-side cutoff valve cuts off the gas refrigerant, and the liquid-side cutoff valve cuts off the liquid refrigerant. Therefore, by reducing the cutoff leakage rate at the liquid-side cutoff valve, even in a case where the cutoff leakage rate at the gas-side cutoff valve is slightly increased, the total rate of refrigerant leakage from the first portion into the predetermined space can be suppressed to a prescribed rate. In view of this, in a refrigerant cycle apparatus according to a first aspect, the cutoff leakage rate at the gas-side cutoff valve is made higher than the cutoff leakage rate at the liquid-side cutoff valve. Accordingly, the cost for manufacturing or purchasing the gas-side cutoff valve can be reduced.

A refrigerant cycle apparatus according to a second aspect of the present disclosure is the refrigerant cycle apparatus according to the first aspect. The cutoff leakage rate is a leakage rate of air when a temperature is 20°C and the predetermined pressure is 1 MPa. The cutoff leakage rate at the gas-side cutoff valve is higher than $300 \times R$ $(cm^3/min)$. The cutoff leakage rate at the liquid-side cutoff valve is lower than $300 \times R$ $(cm^3/min)$.

A refrigerant cycle apparatus according to a third aspect of the present disclosure is the refrigerant cycle apparatus according to the first aspect. The cutoff leakage rate at the gas-side cutoff valve is 1.0 times to 2.7 times or less of $300 \times R$ $(cm^3/min)$. The cutoff leakage rate at the liquid-side cutoff valve is 0.94 times or less of $300 \times R$ $(cm^3/min)$.

With this configuration, it is possible to suppress the cost for manufacturing or purchasing the gas-side cutoff valve while ensuring safety at the time of refrigerant leakage.

A refrigerant cycle apparatus according to a fourth aspect of the present disclosure is the refrigerant cycle apparatus according to the first aspect. The cutoff leakage rate at the gas-side cutoff valve is in a range of 1.6 times to 2.7 times of $300 \times R$ $(cm^3/min)$. The cutoff leakage rate at the liquid-side cutoff valve is in a range of 0.37 times to 0.94 times of $300 \times R$ $(cm^3/min)$.

With this configuration, it is possible to suppress the cost for manufacturing or purchasing the gas-side cutoff valve while ensuring safety at the time of refrigerant leakage.

A refrigerant cycle apparatus according to a fifth aspect of the present disclosure is the refrigerant cycle apparatus according to any one of the second to fourth aspects, in which R= 1.

A refrigerant cycle apparatus according to a sixth aspect of the present disclosure is the refrigerant cycle apparatus according to any one of the second to fourth aspects, in which

$$R = (\rho_{md} \times V_{md} \times A_d)/(C_r \times (2 \times \Delta P_r/\rho_{1r})^{0.5} \times A_v \times \rho_{1rl} + A_v \times (2/(\lambda + 1))^{((\lambda + 1)/2(\lambda - 1))} \times (\lambda \times P_{1r} \times \rho_{1rg})^{0.5}).$$

$A_v$ is a valve clearance sectional area $(m^2)$ of each of the gas-side cutoff valve and the liquid-side cutoff valve in the cutoff state.

$\rho_{1rl}$ is a density $(kg/m^3)$ of the refrigerant in a liquid phase.

$\rho_{1rg}$ is a density $(kg/m^3)$ of the refrigerant in a gas phase.

$P_{1r}$ is a pressure (MPa) of the refrigerant located upstream of each of the gas-side cutoff valve and the liquid-side cutoff valve.

$\lambda$ is a specific heat ratio of the refrigerant.

$\rho_{md}$ is a density $(kg/m^3)$ of a gaseous mixture of the air and the refrigerant passing through a clearance of a door partitioning into inside and outside the predetermined space.

$V_{md}$ is a velocity (m/s) of the gaseous mixture of the air and the refrigerant passing through the clearance of the door partitioning into inside and outside the predetermined space.

$A_d$ is an area $(m^2)$ of the clearance of the door partitioning into inside and outside the predetermined space.

$\Delta P_r$ is a pressure difference (Pa) between inside and outside a hole where the refrigerant leaks.

$C_r$ is a flow rate coefficient of the refrigerant when the refrigerant in the liquid phase passes through the hole where the refrigerant leaks.

$C_r$ is 0.6.

In the refrigerant cycle apparatus according to the sixth aspect, in an exemplary case where R32 is adopted as the refrigerant, the first portion of the refrigerant circuit is positioned at a height of 2.2 m from a floor of the predetermined space, and one fourth of a lower flammability limit (LFL) specified by ISO 817 corresponds to a tolerable refrigerant concentration in the predetermined space, R = 1.96.

With this configuration, the cost for manufacturing or purchasing the gas-side cutoff valve can be further suppressed.

A refrigerant cycle apparatus according to a seventh aspect of the present disclosure is the refrigerant cycle apparatus according to any one of the second to fourth aspects, in which R is determined based on at least one of a tolerable average concentration, a leakage height, and a type of the refrigerant. The tolerable average concentration is an average concentration of the refrigerant leaking into the predetermined space. The tolerable average concentration is a concentration in a range where it is recognized that there is no risk of combustion of the refrigerant leaking into the predetermined space. The leakage height is a position of the first portion in the predetermined space when the refrigerant leaks into the predetermined space.

With this configuration, since R is calculated in consideration of the size of the predetermined space equipped with the refrigerant cycle apparatus, an installation position of the refrigerant cycle apparatus, and the type of the refrigerant, it is possible to obtain specifications of the cutoff leakage rates to be satisfied by the gas-side cutoff valve and the liquid-side cutoff valve.

A refrigerant cycle apparatus according to an eighth aspect of the present disclosure is the refrigerant cycle apparatus according to any one of the first to seventh aspects. The flammable refrigerant is a mildly flammable refrigerant determined as "Class 2L" according to ANSI/ASHRAE Standard 34-2013. The flammable refrigerant is a less flammable refrigerant determined as "Class 2" according to ANSI/ASHRAE Standard 34-2013. The flammable refrigerant is a highly flammable refrigerant determined as "Class 3" according to ANSI/ASHRAE Standard 34-2013.

## BRIEF DESCRIPTION OF THE DRAWINGS

FIG. 1 is a diagram illustrating a schematic configuration of an air conditioner as a refrigerant cycle apparatus according to an embodiment.
FIG. 2 is a diagram illustrating a refrigerant circuit of the air conditioner.
FIG. 3 is a diagram illustrating a room (predetermined space) in which the air conditioner is disposed.
FIG. 4 is a control block diagram of the air conditioner.
FIG. 5 is a chart illustrating a control flow against refrigerant leakage.
FIG. 6 is a diagram illustrating refrigerant leakage velocities at a gas-side cutoff valve and a liquid-side cutoff valve when the gas-side cutoff valve and the liquid-side cutoff valve are valves that satisfy "Annex A (Prescription) Specifications of safety cutoff valves" in the guideline of The Japan Refrigeration and Air Conditioning Industry Association.
FIG. 7 is a diagram illustrating a ratio of the refrigerant leakage velocity at the liquid-side cutoff valve to the refrigerant leakage velocity at the gas-side cutoff valve.

## DESCRIPTION OF EMBODIMENTS

(1) Configuration of Air Conditioner

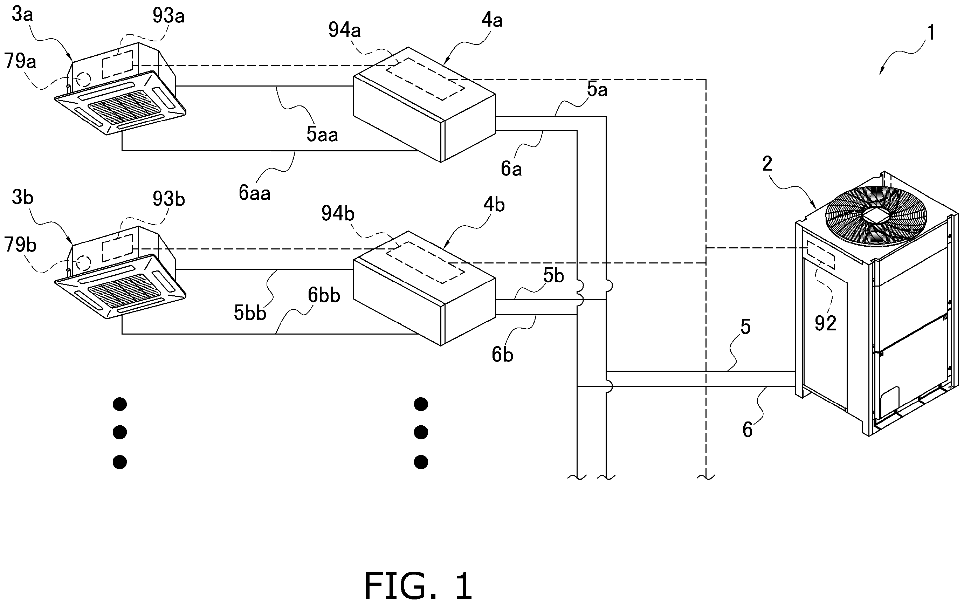

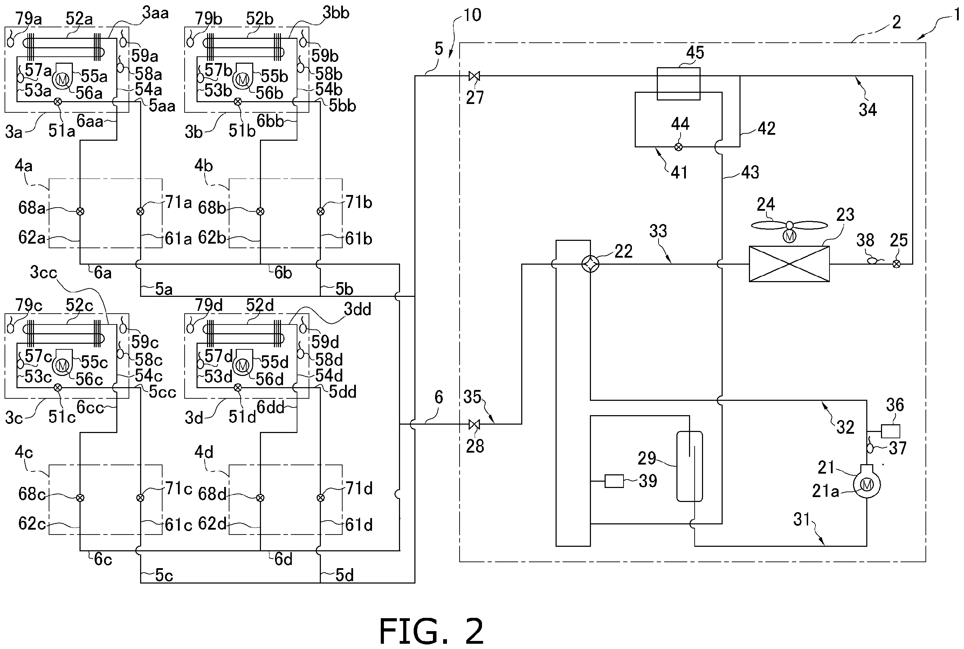

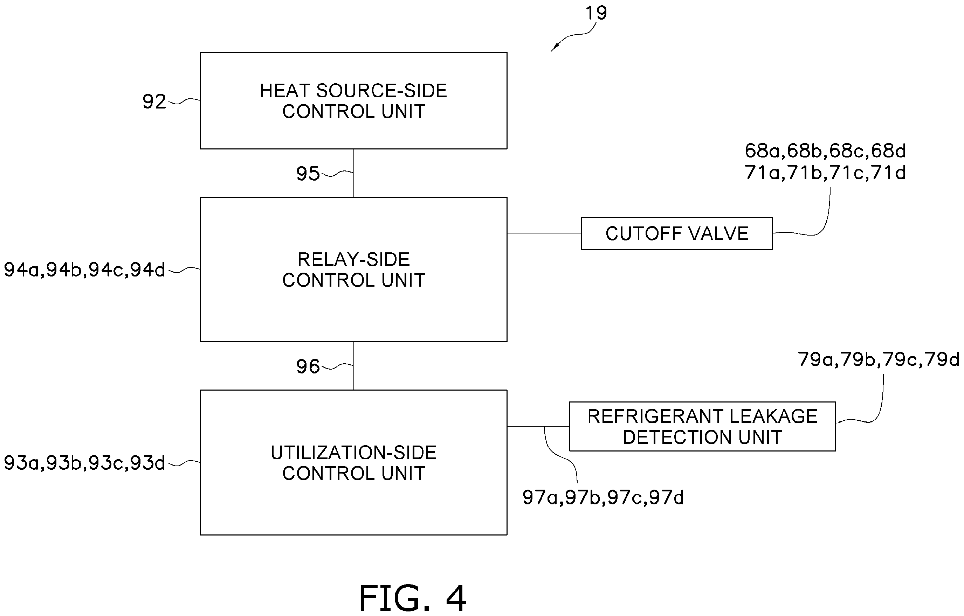

As illustrated in FIG. 1 and FIG. 2, an air conditioner 1 as a refrigerant cycle apparatus according to an embodiment is configured to cool or heat a room (predetermined space) in an architecture such as a building by means of a vapor compression refrigeration cycle. The air conditioner 1 mainly includes a heat source-side unit 2, a plurality of utilization-side units 3a, 3b, 3c, and 3d, relay units 4a, 4b, 4c, and 4d connected to the utilization-side units 3a, 3b, 3c, and 3d, refrigerant connection pipes 5 and 6, and a control unit 19 (see FIG. 4). The plurality of utilization-side units 3a, 3b, 3c, and 3d is connected in parallel to the heat source-side unit 2. The refrigerant connection pipes 5 and 6 connect the heat source-side unit 2 and the utilization-side units 3a, 3b, 3c, and 3d via the relay units 4a, 4b, 4c, and 4d. The control unit 19 controls constituent devices of the heat source-side unit 2, the utilization-side units 3a, 3b, 3c, and 3d, and the relay units 4a, 4b, 4c, and 4d.

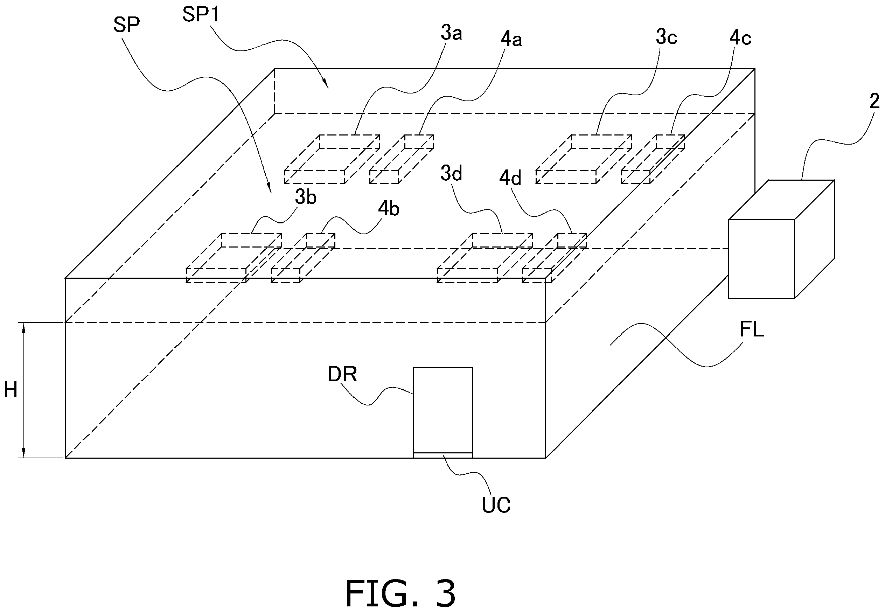

A refrigerant circuit 10 is filled with R32. When a flammable refrigerant leaks from the refrigerant circuit 10 into a room (predetermined space) SP (see FIG. 3) which is thus increased in refrigerant concentration, a combustion accident may be caused. Such a combustion accident needs to be prevented.

The utilization-side units 3a, 3b, 3c, and 3d in the air conditioner 1 are switched to cooling operation or heating operation by a switching mechanism 22 of the heat source-side unit 2.

(1-1) Refrigerant Connection Pipe

A liquid-refrigerant connection pipe 5 mainly includes a combined pipe portion extending from the heat source-side unit 2, first branch pipe portions 5a, 5b, 5c, and 5d, which are branched into a plurality of (here, four) pipes in front of the relay units 4a, 4b, 4c, and 4d, and second branch pipe portions 5aa, 5bb, 5cc, and 5dd connecting the relay units 4a, 4b, 4c, and 4d to the utilization-side units 3a, 3b, 3c, and 3d, respectively.

A gas-refrigerant connection pipe 6 mainly includes a combined pipe portion extending from the heat source-side unit 2, first branch pipe portions 6a, 6b, 6c, and 6d, which are branched into a plurality of (here, four) pipes in front of the relay units 4a, 4b, 4c, and 4d, and second branch pipe portions 6aa, 6bb, 6cc, and 6dd connecting the relay units 4a, 4b, 4c, and 4d to the utilization-side units 3a, 3b, 3c, and 3d, respectively.

(1-2) Utilization-Side Unit

The utilization-side units 3a, 3b, 3c, and 3d are installed in a room of a building or the like. As described above, the utilization-side units 3a, 3b, 3c, and 3d are connected to the heat source-side unit 2 via the liquid-refrigerant connection pipe 5, the gas-refrigerant connection pipe 6, and the relay units 4a, 4b, 4c, and 4d, and constitute part of the refrigerant circuit 10.

The utilization-side units 3a, 3b, 3c, and 3d will be described next in terms of their configurations. Note that since the configuration of the utilization-side unit 3a is similar to the configurations of the utilization-side units 3b, 3c, and 3d, only the configuration of the utilization-side unit 3a will be described here. For the configurations of the utilization-side units 3b, 3c, and 3d, instead of the subscript "a" indicating each part of the utilization-side unit 3a, the subscript "b", "c", or "d" is added, respectively, and the description of each part will be omitted.

The utilization-side unit 3a mainly includes a utilization-side expansion valve 51a and a utilization-side heat exchanger 52a. In addition, the utilization-side unit 3a includes a utilization-side liquid refrigerant pipe 53a that connects a liquid-side end of the utilization-side heat exchanger 52a to the liquid-refrigerant connection pipe 5 (here, the branch pipe portion 5aa), and a utilization-side gas refrigerant pipe 54a that connects a gas-side end of the utilization-side heat exchanger 52a to the gas-refrigerant connection pipe 6 (here, the second branch pipe portion 6aa). The utilization-side liquid refrigerant pipe 53a, the utilization-side expansion valve 51a, the utilization-side heat exchanger 52a, and the utilization-side gas refrigerant pipe 54a constitute a utilization circuit 3aa (first portion) of the utilization-side unit 3a.

The utilization-side expansion valve 51a is an electrically powered expansion valve configured to decompress a refrigerant as well as adjusting a flow rate of the refrigerant flowing in the utilization-side heat exchanger 52a, and is provided on the utilization-side liquid refrigerant pipe 53a.

The utilization-side heat exchanger 52a functions as a refrigerant evaporator to cool indoor air, or functions as a refrigerant radiator to heat indoor air. Here, the utilization-side unit 3a includes a utilization-side fan 55a. The utilization-side fan 55a supplies the utilization-side heat exchanger 52a with indoor air as a cooling source or a heating source for the refrigerant flowing in the utilization-side heat exchanger 52a. The utilization-side fan 55a is driven by a utilization-side fan motor 56a.

The utilization-side unit 3a includes various sensors. Specifically, the utilization-side unit 3a includes a utilization-side heat exchange liquid-side sensor 57a configured to detect a refrigerant temperature at the liquid-side end of the utilization-side heat exchanger 52a, a utilization-side heat exchange gas-side sensor 58a configured to detect a refrigerant temperature at the gas side end of the utilization-side heat exchanger 52a, and an indoor air sensor 59a configured to detect a temperature of indoor air sucked into the utilization-side unit 3a. The utilization-side unit 3a further includes a refrigerant leakage detection unit 79a configured to detect refrigerant leakage. Examples of the refrigerant leakage detection unit 79a can include a semiconductor gas sensor and a detection unit configured to detect a rapid decrease in refrigerant pressure in the utilization-side unit 3a. The semiconductor gas sensor adopted as the refrigerant leakage detection unit 79a is connected to a utilization-side control unit 93a (see FIG. 4). When the detection unit configured to detect a rapid decrease in refrigerant pressure is adopted as the refrigerant leakage detection unit 79a, a pressure sensor is installed on a refrigerant pipe, and a detection algorithm for determination of refrigerant leakage based on a change in sensor value is provided in the utilization-side control unit 93a.

Here, the refrigerant leakage detection unit 79a is provided in the utilization-side unit 3a. However, the present disclosure is not limited to this configuration, and the refrigerant leakage detection unit 79a may alternatively be provided in a remote controller configured to operate the utilization-side unit 3a, in an indoor space as an air conditioning target of the utilization-side unit 3a, or the like. For example, the detection unit 79a may be installed in the vicinity of a lower portion of a blow-out port through which the refrigerant leaks from the utilization-side unit 3a to the predetermined space SP, or at a position immediately below the utilization-side unit 3a or the blow-out port within 10 m from a joint portion of an indoor pipe in a horizontal direction in the predetermined space SP. In a case where the utilization-side expansion valve 51a originally installed in the utilization-side unit 3a has a full-close function, the expansion valve may be used as a liquid-side cutoff valve 71a.

(1-3) Heat Source-Side Unit

The heat source-side unit 2 is installed outside an architecture such as a building, for example, on a roof or on the ground. As described above, the heat source-side unit 2 is connected to the utilization-side units 3a, 3b, 3c, and 3d via the liquid-refrigerant connection pipe 5, the gas-refrigerant connection pipe 6, and the relay units 4a, 4b, 4c, and 4d, to constitute part of the refrigerant circuit 10.

The heat source-side unit 2 mainly includes a compressor 21 and a heat source-side heat exchanger 23. In addition, the heat source-side unit 2 includes the switching mechanism 22 as a cooling and heating switching mechanism for switching between a cooling operation state in which the heat source-side heat exchanger 23 functions as a refrigerant radiator and the utilization-side heat exchangers 52a, 52b, 52c, and 52d function as refrigerant evaporators, and a heating operation state in which the heat source-side heat exchanger 23 functions as a refrigerant evaporator and the utilization-side heat exchangers 52a, 52b, 52c, and 52d function as refrigerant radiators. The switching mechanism 22 and a suction side of the compressor 21 are connected via a sucked refrigerant pipe 31. The sucked refrigerant pipe 31 is provided with an accumulator 29 that temporarily accumulates the refrigerant sucked into the compressor 21. The switching mechanism 22 and a discharge side of the compressor 21 are connected via a discharged refrigerant pipe 32. The switching mechanism 22 and a gas-side end of the heat source-side heat exchanger 23 are connected via a first heat source-side gas refrigerant pipe 33. The liquid-refrigerant connection pipe 5 and a liquid-side end of the heat source-side heat exchanger 23 are connected via a heat source-side liquid refrigerant pipe 34. The heat source-side liquid refrigerant pipe 34 and the liquid-refrigerant connection pipe 5 are connected at a portion provided with a liquid-side shutoff valve 27. The switching mechanism 22 and the gas-refrigerant connection pipe 6 are connected via a second heat source-side gas refrigerant pipe 35. The second heat source-side gas refrigerant pipe 35 and the gas-refrigerant connection pipe 6 are connected at a portion provided with a gas-side shutoff valve 28. The liquid-side shutoff valve 27 and the gas-side shutoff valve 28 are configured to be manually opened and closed. During operation, the liquid-side shutoff valve 27 and the gas-side shutoff valve 28 are in an open state.

The compressor 21 is a device for compressing the refrigerant. For example, a compressor having a closed structure in which a positive displacement compression element (not illustrated) such as a rotary type or a scroll type is driven to rotate by a compressor motor 21a is used.

The switching mechanism 22 is configured to switch a flow of the refrigerant in the refrigerant circuit 10, and is exemplarily implemented by a four-way switching valve. In a case where the heat source-side heat exchanger 23 functions as a refrigerant radiator and the utilization-side heat exchangers 52a, 52b, 52c, and 52d each function as a refrigerant evaporator (hereinafter, referred to as the "cooling operation state"), the switching mechanism 22 connects the discharge side of the compressor 21 and the gas side of the heat source-side heat exchanger 23 (see a solid line for the switching mechanism 22 in FIG. 2). In another case where the heat source-side heat exchanger 23 functions as a refrigerant evaporator and the utilization-side heat exchangers 52a, 52b, 52c, and 52d each function as a refrigerant radiator (hereinafter, referred to as the "heating operation state"), the switching mechanism 22 connects the suction side of the compressor 21 and the gas side of the heat source-side heat exchanger 23 (see a broken line for the first switching mechanism 22 in FIG. 2).

The heat source-side heat exchanger 23 functions as a refrigerant radiator, or functions as a refrigerant evaporator. The heat source-side unit 2 includes a heat source-side fan 24. The heat source-side fan 24 sucks outdoor air into the heat source-side unit 2, causes the sucked outdoor air to exchange heat with the refrigerant in the heat source-side heat exchanger 23, and discharges the outdoor air having exchanged heat to the outside. The heat source-side fan 24 is driven by a heat source-side fan motor.

During the cooling operation, the air conditioner 1 causes the refrigerant to flow from the heat source-side heat exchanger 23 to the utilization-side heat exchangers 52a, 52b, 52c, and 52d each functioning as a refrigerant evaporator via the liquid-refrigerant connection pipe 5 and the relay units 4a, 4b, 4c, and 4d. During the heating operation, the air conditioner 1 causes the refrigerant to flow from the compressor 21 to the utilization-side heat exchangers 52a, 52b, 52c, and 52d each functioning as a refrigerant radiator via the gas-refrigerant connection pipe 6 and the relay units 4a, 4b, 4c, and 4d. During the cooling operation, the switching mechanism 22 switches to the cooling operation state where the heat source-side heat exchanger 23 functions as a refrigerant radiator and the refrigerant flows from the heat source-side unit 2 to the utilization-side units 3a, 3b, 3c, and 3d via the liquid-refrigerant connection pipe 5 and the relay units 4a, 4b, 4c, and 4d. During the heating operation, the switching mechanism 22 switches to the heating operation state where the refrigerant flows from the utilization-side units 3a, 3b, 3c, and 3d to the heat source-side unit 2 via the liquid-refrigerant connection pipe 5 and the relay units 4a, 4b, 4c, and 4d and the heat source-side heat exchanger 23 functions as a refrigerant evaporator.

The heat source-side liquid refrigerant pipe 34 is provided with a heat source-side expansion valve 25 in this case. The heat source-side expansion valve 25 is an electrically powered expansion valve configured to decompress the refrigerant during the heating operation, and is provided on the heat source-side liquid refrigerant pipe 34, at a portion adjacent to the liquid-side end of the heat source-side heat exchanger 23.

The heat source-side liquid refrigerant pipe 34 is connected to a refrigerant return pipe 41 and is provided with a refrigerant cooler 45. The refrigerant return pipe 41 causes part of the refrigerant flowing in the heat source-side liquid refrigerant pipe 34 to branch to be sent to the compressor 21. The refrigerant cooler 45 cools the refrigerant flowing in the heat source-side liquid refrigerant pipe 34 by means of the refrigerant flowing in the refrigerant return pipe 41. The heat source-side expansion valve 25 is provided on the heat source-side liquid refrigerant pipe 34, at a portion closer to the heat source-side heat exchanger 23 than to the refrigerant cooler 45.

The refrigerant return pipe 41 is a refrigerant pipe causing the refrigerant branching from the heat source-side liquid refrigerant pipe 34 to be sent to the suction side of the compressor 21. The refrigerant return pipe 41 mainly includes a refrigerant return inlet pipe 42 and a refrigerant return outlet pipe 43. The refrigerant return inlet pipe 42 causes part of the refrigerant flowing in the heat source-side liquid refrigerant pipe 34 to branch from a portion between the liquid-side end of the heat source-side heat exchanger 23 and the liquid-side shutoff valve 27 (a portion between the heat source-side expansion valve 25 and the refrigerant cooler 45 in this case) and be sent to an inlet, adjacent to the refrigerant return pipe 41, of the refrigerant cooler 45. The refrigerant return inlet pipe 42 is provided with a refrigerant return expansion valve 44. The refrigerant return expansion valve 44 decompresses the refrigerant flowing in the refrigerant return pipe 41 as well as adjusting a flow rate of the refrigerant flowing in the refrigerant cooler 45. The refrigerant return expansion valve 44 is implemented by an electrically powered expansion valve. The refrigerant return outlet pipe 43 causes the refrigerant to be sent from an outlet, adjacent to the refrigerant return pipe 41, of the refrigerant cooler 45 to the sucked refrigerant pipe 31. The refrigerant return outlet pipe 43 of the refrigerant return pipe 41 is connected to the sucked refrigerant pipe 31, at a portion adjacent to an inlet of the accumulator 29. The refrigerant cooler 45 cools the refrigerant flowing in the heat source-side liquid refrigerant pipe 34 by means of the refrigerant flowing in the refrigerant return pipe 41.

The heat source-side unit 2 includes various sensors. Specifically, the heat source-side unit 2 includes a discharge pressure sensor 36 configured to detect a pressure (discharge pressure) of the refrigerant discharged from the compressor 21, a discharge temperature sensor 37 configured to detect a temperature (discharge temperature) of the refrigerant discharged from the compressor 21, and a suction pressure sensor 39 configured to detect a pressure (suction pressure) of the refrigerant sucked into the compressor 21. The heat source-side unit 2 further includes a heat source-side heat exchange liquid-side sensor 38 configured to detect a temperature (heat source-side heat exchange outlet temperature) of the refrigerant at the liquid-side end of the heat source-side heat exchanger 23.

(1-4) Relay Unit

The relay units 4a, 4b, 4c, and 4d are installed in a space SP1 behind a ceiling of the room (predetermined space) SP (see FIG. 3) in an architecture such as a building. The relay units 4a, 4b, 4c, and 4d are interposed between the utilization-side units 3a, 3b, 3c, and 3d and the heat source-side unit 2, respectively, together with the liquid-refrigerant connection pipe 5 and the gas-refrigerant connection pipe 6, and constitute part of the refrigerant circuit 10. The relay units 4a, 4b, 4c, and 4d may be disposed near the utilization-side units 3a, 3b, 3c, and 3d, respectively. Alternatively, the relay units 4a, 4b, 4c, and 4d may be disposed away from the utilization-side units 3a, 3b, 3c, and 3d, or may be disposed together in one location.

The relay units 4a, 4b, 4c, and 4d will be described next in terms of their configurations. The relay unit 4a and the relay units 4b, 4c, and 4d are configured similarly. The configuration of only the relay unit 4a will thus be described herein. For the configurations of the relay units 4b, 4c, and 4d, instead of the subscript "a" indicating each part of the relay unit 4a, the subscript "b", "c", or "d" is added, respectively, and the description of each part will be omitted.

The relay unit 4a mainly includes a liquid connecting pipe 61a and a gas connecting pipe 62a.

The liquid connecting pipe 61a has one end connected to the first branch pipe portion 5a of the liquid-refrigerant connection pipe 5, and the other end connected to the second branch pipe portion 5aa of the liquid-refrigerant connection pipe 5. The liquid connecting pipe 61a is provided with a liquid-side cutoff valve 71a. The liquid-side cutoff valve 71a is implemented by an electrically powered expansion valve.

The gas connecting pipe 62a has one end connected to the first branch pipe portion 6a of the gas-refrigerant connection pipe 6, and the other end connected to the second branch pipe portion 6aa of the gas-refrigerant connection pipe 6. The gas connecting pipe 62a is provided with a gas-side cutoff valve 68a. The gas-side cutoff valve 68a is implemented by an electrically powered expansion valve.

The liquid-side cutoff valve 71a and the gas-side cutoff valve 68a are fully opened when the cooling operation or heating operation is performed.

(1-5) Control Unit

As illustrated in FIG. 4, the control unit 19 includes a heat source-side control unit 92, relay-side control units 94a, 94b, 94c, and 94d, and utilization-side control units 93a, 93b, 93c, and 93d, which are connected via transmission lines 95 and 96. The heat source-side control unit 92 controls constituent devices of the heat source-side unit 2. The relay-side control units 94a, 94b, 94c, and 94d control constituent devices of the relay units 4a, 4b, 4c, and 4d, respectively. The utilization-side control units 93a, 93b, 93c, and 93d control constituent devices of the utilization-side units 3a, 3b, 3c, and 3d, respectively. The heat source-side control unit 92 provided in the heat source-side unit 2, the relay-side control units 94a, 94b, 94c, and 94d provided in the relay units 4a, 4b, 4c, and 4d, and the utilization-side control units 93a, 93b, 93c, and 93d provided in the utilization-side units 3a, 3b, 3c, and 3d, respectively, can exchange information, such as a control signal, with each other via the transmission lines 95 and 96.

The heat source-side control unit 92 includes a control board mounted with electric components such as a microcomputer and a memory, and is connected to various constituent devices 21, 22, 24, 25, and 44 and various sensors 36, 37, 38, and 39 in the heat source-side unit 2. The relay-side control units 94a, 94b, 94c, and 94d each include a control board mounted with electric components such as a microcomputer and a memory, and are connected to gas-side cutoff valves 68a to 68d and liquid-side cutoff valves 71a to 71d of the relay units 4a, 4b, 4c, and 4d. The relay-side control units 94a, 94b, 94c, and 94d and the heat source-side control unit 92 are connected via the first transmission line 95. The utilization-side control units 93a, 93b, 93c, and 93d each include a control board mounted with electric components such as a microcomputer and a memory, and are connected to various constituent devices 51a to 51d and 55a to 55d of the utilization-side units 3a, 3b, 3c, and 3d and various sensors 57a to 57d, 58a to 58d, 59a to 59d, and 79a to 79d. Assume that the refrigerant leakage detection units 79a, 79b, 79c, and 79d are connected to the utilization-side control units 93a, 93b, 93c, and 93d via wires 97a, 97b, 97c, and 97d. The utilization-side control units 93a, 93b, 93c, and 93d and the relay-side control units 94a, 94b, 94c, and 94d are connected via the second transmission line 96.

In this manner, the control unit 19 controls operation of the entire air conditioner 1. Specifically, based on detection signals of various sensors 36, 37, 38, 39, 57a to 57d, 58a to 58d, 59a to 59d, 79a to 79d, and the like as described above, the control unit 19 controls various constituent devices 21, 22, 24, 25, 44, 51a to 51d, 55a to 55d, 68a to 68d, and 71a to 71d of the air conditioner 1 (here, the heat source-side unit 2, the utilization-side units 3a, 3b, 3c, and 3d, and the relay units 4a, 4b, 4c, and 4d).

(2) Basic Operation of Air Conditioner

The air conditioner 1 will be described next in terms of its basic operation. As described above, the basic operation of the air conditioner 1 includes the cooling operation and the heating operation. Note that the basic operation of the air conditioner 1 described below is performed by the control unit 19 that controls the constituent devices of the air conditioner 1 (the heat source-side unit 2, the utilization-side units 3a, 3b, 3c, and 3d, and the relay units 4a, 4b, 4c, and 4d).

(2-1) Cooling Operation

During the cooling operation in an exemplary case where all the utilization-side units 3a, 3b, 3c, and 3d perform the cooling operation (an operation by each one of the utilization-side heat exchangers 52a, 52b, 52c, and 52d functioning as a refrigerant evaporator and the heat source-side heat exchanger 23 functioning as a refrigerant radiator), the switching mechanism 22 switches to the cooling operation state (the state depicted by the solid line for the switching mechanism 22 in FIG. 2) to drive the compressor 21, the heat source-side fan 24, and the utilization-side fans 55a, 55b, 55c, and 55d. Furthermore, the liquid-side cutoff valves 71a, 71b, 71c, and 71d and the gas-side cutoff valves 68a, 68b, 68c, and 68d of the relay units 4a, 4b, 4c, and 4d are fully opened.

Here, various devices of the utilization-side units 3a, 3b, 3c, and 3d are operated by the utilization-side control units 93a, 93b, 93c, and 93d, respectively. The utilization-side control units 93a, 93b, 93c, and 93d transmit information indicating that the utilization-side units 3a, 3b, 3c, and 3d will perform the cooling operation to the heat source-side control unit 92 and the relay-side control units 94a, 94b, 94c, and 94d via the transmission lines 95 and 96. Various devices of the heat source-side unit 2 and the relay units 4a, 4b, 4c, and 4d are operated by the heat source-side control unit 92 and the relay-side control units 94a, 94b, 94c, and 94d that receive the information from the utilization-side units 3a, 3b, 3c, and 3d, respectively.

During the cooling operation, a high-pressure refrigerant discharged from the compressor 21 is sent to the heat source-side heat exchanger 23 via the switching mechanism 22. The refrigerant sent to the heat source-side heat exchanger 23 condenses by being cooled by exchanging heat with outdoor air supplied by the heat source-side fan 24 in the heat source-side heat exchanger 23 that functions as a refrigerant radiator. This refrigerant flows out of the heat source-side unit 2 via the heat source-side expansion valve 25, the refrigerant cooler 45, and the liquid-side shutoff valve 27. In the refrigerant cooler 45, the refrigerant flowing in the refrigerant return pipe 41 cools the refrigerant flowing out of the heat source-side unit 2.

The refrigerant flowing out of the heat source-side unit 2 is branched to be sent to the relay units 4a, 4b, 4c, and 4d via the liquid-refrigerant connection pipe 5 (the combined pipe portion and the first branch pipe portions 5a, 5b, 5c, and 5d). The refrigerant sent to the relay units 4a, 4b, 4c, and 4d flows out of the relay units 4a, 4b, 4c, and 4d through the liquid-side cutoff valves 71a, 71b, 71c, and 71d, respectively.

The refrigerant flowing out of the relay units 4a, 4b, 4c, and 4d is sent to the utilization-side units 3a, 3b, 3c, and 3d through the second branch pipe portions 5aa, 5bb, 5cc, and 5dd (portions of the liquid-refrigerant connection pipe 5 that connects the relay units 4a, 4b, 4c, and 4d to the utilization-side units 3a, 3b, 3c, and 3d), respectively. The refrigerant sent to the utilization-side units 3a, 3b, 3c, and 3d is decompressed by the utilization-side expansion valves 51a, 51b, 51c, and 51d, and is then sent to the utilization-side heat exchangers 52a, 52b, 52c, and 52d, respectively. The refrigerant sent to the utilization-side heat exchangers 52a, 52b, 52c, and 52d evaporates by being heated by exchanging heat with indoor air supplied from inside the room by the utilization-side fans 55a, 55b, 55c, and 55d in the utilization-side heat exchangers 52a, 52b, 52c, and 52d that function as refrigerant evaporators, respectively. The evaporated refrigerant flows out of the utilization-side units 3a, 3b, 3c, and 3d. Meanwhile, the indoor air cooled by the utilization-side heat exchangers 52a, 52b, 52c, and 52d is sent into the room, thereby cooling the room.

The refrigerant flowing out of the utilization-side units 3a, 3b, 3c, and 3d is sent to the relay units 4a, 4b, 4c, and 4d through the second branch pipe portions 6aa, 6bb, 6cc, and 6dd of the gas-refrigerant connection pipe 6, respectively. The refrigerant sent to the relay units 4a, 4b, 4c, and 4d flows out of the relay units 4a, 4b, 4c, and 4d through the gas-side cutoff valves 68a, 68b, 68c, and 68d, respectively.

The refrigerant flowing out of the relay units 4a, 4b, 4c, and 4d is sent to the heat source-side unit 2 in a combined state through the gas-refrigerant connection pipe 6 (the combined pipe portion and the first branch pipe portions 6a, 6b, 6c, and 6d). The refrigerant sent to the heat source-side unit 2 is sucked into the compressor 21 via the gas-side shutoff valve 28, the switching mechanism 22, and the accumulator 29.

(2-2) Heating Operation

During the heating operation in an exemplary case where all the utilization-side units 3a, 3b, 3c, and 3d perform the heating operation (an operation by each one of the utilization-side heat exchangers 52a, 52b, 52c, and 52d functioning as a refrigerant radiator and the heat source-side heat exchanger 23 functioning as a refrigerant evaporator), the switching mechanism 22 switches to the heating operation state (the state depicted by the broken line for the switching mechanism 22 in FIG. 2) to drive the compressor 21, the heat source-side fan 24, and the utilization-side fans 55a, 55b, 55c, and 55d. Furthermore, the liquid-side cutoff valves 71a, 71b, 71c, and 71d and the gas-side cutoff valves 68a, 68b, 68c, and 68d of the relay units 4a, 4b, 4c, and 4d are fully opened.

Here, various devices of the utilization-side units 3a, 3b, 3c, and 3d are operated by the utilization-side control units 93a, 93b, 93c, and 93d, respectively. The utilization-side control units 93a, 93b, 93c, and 93d transmit information indicating that the utilization-side units 3a, 3b, 3c, and 3d will perform the heating operation to the heat source-side control unit 92 and the relay-side control units 94a, 94b, 94c, and 94d via the transmission lines 95 and 96. Various devices of the heat source-side unit 2 and the relay units 4a, 4b, 4c, and 4d are operated by the heat source-side control unit 92 and the relay-side control units 94a, 94b, 94c, and 94d that receive the information from the utilization-side units 3a, 3b, 3c, and 3d, respectively.

The high-pressure refrigerant discharged from the compressor 21 flows out of the heat source-side unit 2 through the switching mechanism 22 and the gas-side shutoff valve 28.

The refrigerant flowing out of the heat source-side unit 2 is sent to the relay units 4a, 4b, 4c, and 4d via the gas-refrigerant connection pipe 6 (the combined pipe portion and the first branch pipe portions 6a, 6b, 6c, and 6d). The refrigerant sent to the relay units 4a, 4b, 4c, and 4d flows out of the relay units 4a, 4b, 4c, and 4d through the gas-side cutoff valves 68a, 68b, 68c, and 68d, respectively.

The refrigerant flowing out of the relay units 4a, 4b, 4c, and 4d is sent to the utilization-side units 3a, 3b, 3c, and 3d through the second branch pipe portions 6aa, 6bb, 6cc, and 6dd (portions of the gas-refrigerant connection pipe 6 that connects the relay units 4a, 4b, 4c, and 4d to the utilization-side units 3a, 3b, 3c, and 3d), respectively. The refrigerant sent to the utilization-side units 3a, 3b, 3c, and 3d is sent to the utilization-side heat exchangers 52a, 52b, 52c, and 52d, respectively. The high-pressure refrigerant sent to the utilization-side heat exchangers 52a, 52b, 52c, and 52d condenses by being cooled by exchanging heat with indoor air supplied from inside the room by the utilization-side fans 55a, 55b, 55c, and 55d in the utilization-side heat exchangers 52a, 52b, 52c, and 52d that function as refrigerant radiators, respectively. The condensed refrigerant is decompressed by the utilization-side expansion valves 51a, 51b, 51c, and 51d, and then flows out of the utilization-side units 3a, 3b, 3c, and 3d, respectively. Meanwhile, the indoor air heated by the utilization-side heat exchangers 52a, 52b, 52c, and 52d is sent into the room, thereby heating the room.

The refrigerant flowing out of the utilization-side units 3a, 3b, 3c, and 3d is sent to the relay units 4a, 4b, 4c, and 4d through the second branch pipe portions 5aa, 5bb, 5cc, and 5dd (portions of the liquid-refrigerant connection pipe 5 that connects the relay units 4a, 4b, 4c, and 4d to the utilization-side units 3a, 3b, 3c, and 3d), respectively. The refrigerant sent to the relay units 4a, 4b, 4c, and 4d flows out of the relay units 4a, 4b, 4c, and 4d through the liquid-side cutoff valves 71a, 71b, 71c, and 71d, respectively.

The refrigerant flowing out of the relay units 4a, 4b, 4c, and 4d is sent to the heat source-side unit 2 in a combined state through the liquid-refrigerant connection pipe 5 (the combined pipe portion and the first branch pipe portions 5a, 5b, 5c, and 5d). The refrigerant sent to the heat source-side unit 2 is sent to the heat source-side expansion valve 25 via the liquid-side shutoff valve 27 and the refrigerant cooler 45. The refrigerant sent to the heat source-side expansion valve 25 is decompressed by the heat source-side expansion valve 25 and is then sent to the heat source-side heat exchanger 23. The refrigerant sent to the heat source-side heat exchanger 23 exchanges heat with outdoor air supplied by the heat source-side fan 24 to be heated and thus evaporates. The refrigerant thus evaporated is sucked into the compressor 21 via the switching mechanism 22 and the accumulator 29.

(3) Operation of Air Conditioner upon Refrigerant Leakage

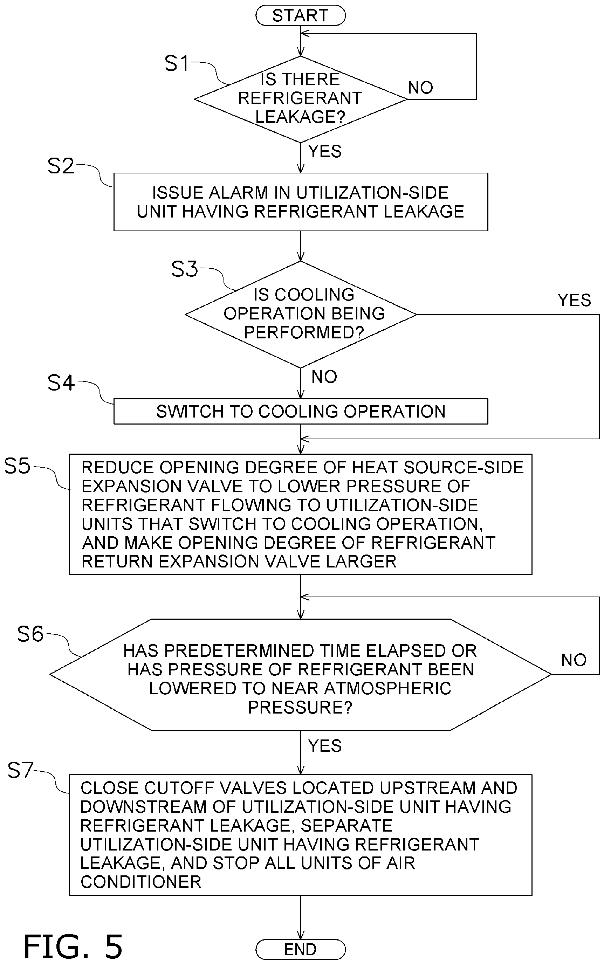

Operation of the air conditioner 1 upon refrigerant leakage will be described next with reference to a control flow illustrated in FIG. 5. Similarly to the basic operation described above, the following operation of the air conditioner 1 upon refrigerant leakage is performed by the control unit 19 configured to control the constituent devices of the air conditioner 1 (the heat source-side unit 2, the utilization-side units 3a, 3b, 3c, and 3d, and the relay units 4a, 4b, 4c, and 4d).

Similar control is performed regardless of which one of the utilization-side units 3a, 3b, 3c, and 3d has refrigerant leakage. Described herein is an exemplary case of detection of refrigerant leakage into the room equipped with the utilization-side unit 3a.

In Step S1 in FIG. 5, the control unit 19 determines which one of the refrigerant leakage detection units 79a, 79b, 79c, and 79d of the utilization-side units 3a, 3b, 3c, and 3d detects refrigerant leakage. In a case where the refrigerant leakage detection unit 79a of the utilization-side unit 3a detects refrigerant leakage into the predetermined space (room) equipped with the utilization-side unit 3a, the flow transitions to subsequent Step S2.

In Step S2, in the utilization-side unit 3a having refrigerant leakage, the control unit 19 issues an alarm to a person in the predetermined space of the utilization-side unit 3a by using an alarm device (not illustrated) that issues an alarm with an alarm sound such as a buzzer and turns on a light.

Next, in Step S3, the control unit 19 determines whether or not the utilization-side unit 3a is performing the cooling operation. Here, when the utilization-side unit 3a is performing the heating operation, or when the utilization-side unit 3a is in a stopped or suspended state in which neither cooling nor heating is performed, the flow transitions from Step S3 to Step S4.

In Step S4, the utilization-side unit 3a performs the cooling operation in order to lower the pressure of the refrigerant of the utilization-side unit 3a. However, unlike the normal cooling operation, the cooling operation in Step S4 is an operation of giving priority to lowering the pressure of the refrigerant of the utilization-side unit 3a. When the air conditioner 1 performs the heating operation, the switching mechanism 22 switches to the cooling operation state to cause the air conditioner 1 to perform the cooling operation. When the utilization-side unit 3a is in a stopped or suspended state, the utilization-side unit 3a is put into the cooling operation state to lower the pressure of the refrigerant of the utilization-side unit 3a.

Following Step S4, in Step S5, the control unit 19 reduces the opening degree of the heat source-side expansion valve 25 of the heat source-side unit 2. In the normal cooling operation, the heat source-side expansion valve 25 is fully opened, but here, the opening degree of the heat source-side expansion valve 25 is reduced to lower the pressure of the refrigerant flowing to the utilization-side units 3a, 3b, 3c, and 3d. Note that the utilization-side expansion valve 51a of the utilization-side unit 3a is in a fully open state.

In Step S5, the control unit 19 makes the opening degree of the refrigerant return expansion valve 44 larger than in the normal cooling operation to increase the amount of refrigerant flowing through the refrigerant return pipe 41 that functions as a bypass route. With this operation, out of the refrigerant that radiates heat and condenses in the heat source-side heat exchanger 23 and heads for the utilization-side units 3a, 3b, 3c, and 3d, more refrigerant returns to the suction side of the compressor 21 through the refrigerant return pipe 41. In other words, a smaller portion of the refrigerant radiates heat to be condensed in the heat source-side heat exchanger 23, and flows to the utilization-side units 3a, 3b, 3c, and 3d. This control leads to quicker decrease in pressure of the refrigerant of the utilization-side unit 3a having refrigerant leakage. The refrigerant having flown through the refrigerant return pipe 41 flows into the accumulator 29. Part of the refrigerant thus having flown thereinto can thus be accumulated in the accumulator 29.

Moreover, in Step S5, the number of revolutions of the utilization-side fan 55a can be decreased.

In Step S6, the control unit 19 determines whether or not the pressure of the refrigerant of the utilization-side unit 3a has been lowered sufficiently based on sensor values of the utilization-side heat exchange liquid-side sensor 57a and the utilization-side heat exchange gas-side sensor 58a of the utilization-side unit 3a. When the control unit 19 determines that the sensor values satisfy predetermined conditions and the pressure of the refrigerant of the utilization-side unit 3a has been sufficiently lowered, the flow transitions from Step S6 to Step S7. In Step S6, the passage of time is also monitored, and if a predetermined time has elapsed after performing Step S5, the control unit 19 determines that the pressure of the refrigerant of the utilization-side unit 3a has been lowered to some extent, and the flow transitions to Step S7.

Note that in Step S6, the control unit 19 monitors the pressure of the refrigerant of the utilization-side unit 3a, and substantially controls the pressure of the refrigerant in the utilization-side unit 3a from becoming lower than the atmospheric pressure. The flow transitions from Step S6 to Step S7 before the pressure of the refrigerant in the utilization-side unit 3a becomes lower than the atmospheric pressure.

In Step S7, the control unit 19 closes the liquid-side cutoff valve 71a and the gas-side cutoff valve 68a of the relay unit 4a corresponding to the utilization-side unit 3a having refrigerant leakage. The utilization-side unit 3a is thus separated from the refrigerant circuit 10 having refrigerant circulation, to substantially stop the flow of the refrigerant from the heat source-side unit 2 to the utilization-side unit 3a. The, in Step S7, the control unit 19 stops all the units including the remaining utilization-side units 3b, 3c, and 3d and the heat source-side unit 2.

(4) Designing or Selection of Gas-Side Cutoff Valve and Liquid-Side Cutoff Valve

As described above, the liquid-side cutoff valves 71a, 71b, 71c, and 71d and the gas-side cutoff valves 68a, 68b, 68c, and 68d are controlled to be closed upon detection of refrigerant leakage (see Step S7 in FIG. 4). In other words, if refrigerant leakage is detected in any one of the utilization-side units 3a, 3b, 3c, and 3d, the liquid-side cutoff valve 71a, 71b, 71c, or 71d and the gas-side cutoff valve 68a, 68b, 68c, or 68d of the corresponding relay unit 4a, 4b, 4c, or 4d are switched from a non-cutoff state into the cutoff state where the cutoff valves are closed.

In the air conditioner 1 according to the present embodiment, the liquid-side cutoff valve 71a, 71b, 71c, or 71d and the gas-side cutoff valve 68a, 68b, 68c, or 68d are designed or selected in the following manner.

(4-1) Regarding Room (Predetermined Space) Equipped with Utilization-Side Unit of Air Conditioner

Information on an architecture equipped with the air conditioner 1, specifically, information on the room equipped with the utilization-side units 3a, 3b, 3c, and 3d is acquired before selection or designing of the gas-side cutoff valve and the liquid-side cutoff valve.

In this case, four utilization-side units 3a, 3b, 3c, and 3d as well as the relay units 4a, 4b, 4c, and 4d are disposed in the space SP1 behind the ceiling of the room (predetermined space) SP illustrated in FIG. 3. The room SP has a floor FL not equipped with any utilization-side unit. In other words, the utilization-side units 3a, 3b, 3c, and 3d are to be installed at a ceiling and are not to be placed on a floor.

The room SP is provided with a door DR allowing a person to enter or leave the room. The door DR is closed when no person enters or leaves the room. The door DR is provided therebelow with a clearance (undercut portion) UC. The ceiling of the room SP is provided with a ventilating hole (not illustrated). The clearance UC has an area of $A_d$ (m$^2$). In an exemplary case where the clearance UC is 4 mm in height and is 800 mm in width, the area $A_d$ of the clearance UC is 0.0032 (m$^2$) obtained by multiplying these values.

The utilization-side units 3a, 3b, 3c, and 3d are disposed in the space SP1 behind the ceiling of the room SP, so that a distance H from the floor FL to each of the utilization circuits 3aa, 3bb, 3cc, and 3dd of the utilization-side units 3a, 3b, 3c, and 3d is assumed to be equal to the height (the height of the ceiling) of the room SP.

(4-2) Method of Calculating Refrigerant Leakage Velocities at Gas-Side Cutoff Valve and Liquid-Side Cutoff Valve

Described next in order is a method of calculating a cutoff leakage rate, which is required for designing or selection of the gas-side cutoff valve and the liquid-side cutoff valve. The following description refers generally to a gas-side cutoff valve and a liquid-side cutoff valve, and a utilization unit without specifying any of the gas-side cutoff valves and the liquid-side cutoff valves, and the utilization units uniquely included in the air conditioner 1 according to the present embodiment. The gas-side cutoff valve and the liquid-side cutoff valve, and the utilization unit will thus be described without using any reference numerals and signs in the drawings.

In addition, in the present embodiment, the cutoff leakage rate is evaluated using "air" as gas that is in a single gas phase in a standard state.

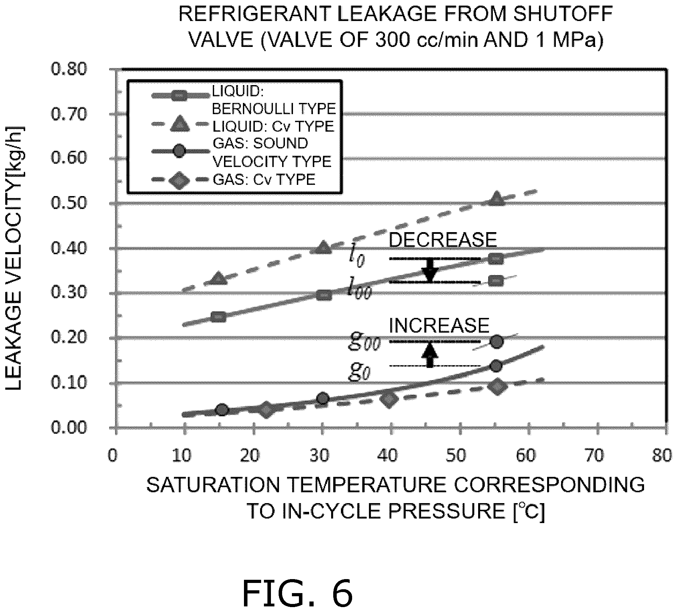

As described in the above "SUMMARY OF THE INVENTION", in the "Annex A (Prescription) Specifications of safety cutoff valves" in the guideline by The Japan Refrigeration and Air Conditioning Industry Association, when fluid is air and a differential pressure between upstream and downstream of each of the gas-side cutoff valve and the liquid-side cutoff valve is 1MPa, 300 (cm$^3$/min) or less is prescribed as the cutoff leakage rate to be satisfied by the gas-side cutoff valve and the liquid-side cutoff valve. It is possible to calculate a valve clearance when the gas-side cutoff valve and the liquid-side cutoff valve are closed, and the refrigerant leakage velocities at the gas-side cutoff valve and the liquid-side cutoff valve, which are assumed by the above guideline, from the same cutoff leakage rate uniformly requested to the gas-side cutoff valve and the liquid-side cutoff valve. As illustrated in FIG. 6, in the same leakage clearance, the refrigerant leakage velocity at the liquid-side cutoff valve is higher than the refrigerant leakage velocity at the gas-side cutoff valve. This is because the liquid refrigerant has a higher density than the gas refrigerant. Therefore, if the refrigerant leakage velocity can be calculated from the above guideline, it is possible to calculate how much the cutoff leakage rate of the gas-side cutoff valve can be increased within a range not exceeding the refrigerant leakage velocity.

The refrigerant leakage velocities at the gas-side cutoff valve and the liquid-side cutoff valve when the gas-side cutoff valve and the liquid-side cutoff valve satisfy the specifications of the above guideline are as illustrated in FIG. 6.

A horizontal axis in FIG. 6 represents a saturation temperature corresponding to an in-cycle pressure of the refrigerant. When an ambient temperature of the room (predetermined space) where the liquid refrigerant is accumulated or the heat source-side heat exchanger is changed, the saturation temperature corresponding to the in-cycle pressure is changed. Here, first, the refrigerant leakage velocity derived from the cutoff leakage rate in the above guideline may be calculated by using a method of calculating the refrigerant leakage rate of the liquid refrigerant by a formula using Bernoulli's theorem and calculating the refrigerant leakage rate of the gas refrigerant by a formula expressing a flow rate of compressible fluid (first calculation method). Second, a method of calculating the refrigerant leakage rate by using a Cv value representing a leakage rate unique to each of the gas-side cutoff valve and the liquid-side cutoff valve (second calculation method) may be used. The refrigerant leakage velocity can also be calculated from the calculation of the leakage rate described above. In FIG. 6, a value according to the first calculation method is represented by a solid line, and a value according to the second calculation method is represented by a broken line. Here, R32, which is a combustibility rank A2L, was taken as a representative of the flammable refrigerant. Similarly to R32, the same drawing can apply to other flammable refrigerants by setting a physical property value to a value of each refrigerant.

(4-2-1) Calculation of Valve Clearance Equivalent Diameter $d_v$ When Gas-Side Cutoff Valve and Liquid-Side Cutoff Valve are Closed

In the above guideline, when fluid is air and a differential pressure between upstream and downstream of each of the gas-side cutoff valve and the liquid-side cutoff valve is 1MPa, 300 ($cm^3$/min) or less is prescribed as the cutoff leakage rate to be satisfied by the gas-side cutoff valve and the liquid-side cutoff valve. From these conditions, first, the valve clearances when the gas-side cutoff valve and the liquid-side cutoff valve are closed are obtained.

A valve clearance sectional area $A_v$ is obtained from an air volume flow rate, an air inlet absolute pressure, an air density, and an air specific heat ratio, and the valve clearance equivalent diameter $d_v$ is then obtained, assuming that the section has a circular shape. Air is assumed to have a specific heat ratio $\kappa$ (20°C) of 1.40. When a pressure ratio P2/P1 exceeds $(2/(\kappa + 1)) \times (\kappa/(\kappa - 1))$, a flow velocity exceeds a sound velocity. At the above differential pressure, P2/P1 = (1 + 0.1013)/0.1013 = 10.87, and $(2/(\kappa + 1)) \times (\kappa/(\kappa - 1)) = (2/2.4) \times 1.4/0.4 = 0.528$, and the flow velocity thus exceeds a supersonic velocity.

A mass flow rate $G_a$, a volume flow rate $Q_a$, and the valve clearance equivalent diameter $d_v$ are obtained in accordance with the following formulae. In a case where the flow velocity exceeds the sound velocity,

(Formula 1):

$$G_a = A_v \times (2/(\kappa + 1))^{((\kappa + 1)/2(\kappa - 1))} \times (\kappa \times P_{1a} \times \rho_{1a})^{0.5},$$

(Formula 2):

$$A_v = Q_a \times \rho_{2a} \times (2/(\kappa + 1))^{(-(\kappa + 1)/2(\kappa - 1))} \times (\kappa \times P_{1a} \times \rho_{1a})^{(-0.5)},$$

and

(Formula 3):

$$d_v = (4 \times A_v/\pi)^{0.5}.$$

In the above guideline, it is defined that the cutoff leakage rates to be satisfied by the gas-side cutoff valve and the liquid-side cutoff valve are 300 ($cm^3$/min) or less, which corresponds to $5 \times 10^{-6}$ ($m^3$/s). In the above guideline, the same cutoff leakage rate of 300 ($cm^3$/min) or less is set for both the gas-side cutoff valve and the liquid-side cutoff valve. Therefore, the same valve clearance is assumed for both the gas-side cutoff valve and the liquid-side cutoff valve.

This condition is substituted in (Formula 2) to obtain $A_v$. The above "Annex A (Prescription) Specifications of safety cutoff valves" tolerates a valve clearance ($d_{vG}$) and a valve clearance sectional area ($A_{vG}$) obtained by the following formulae:

$$d_{vG} = d_{vL} = 5.47E - 5 \ (m),$$

and

$$A_{vG} = A_{vL} = 2.24E - 9 \ (m^2).$$

(4-2-2) Calculation of Refrigerant Leakage Velocity According to First Calculation Method

Calculated next is a leakage velocity $G_r$ of a refrigerant leaking from the obtained valve clearance ($d_{vG}$).

This calculation is made assuming that a refrigerant in a liquid phase is located upstream of the cutoff valve viewed from the utilization-side unit in a liquid-side line (liquid-refrigerant connection pipe) and that a refrigerant in a gas phase is located upstream of the cutoff valve viewed from the utilization-side unit in a gas-side line (gas-refrigerant connection pipe).

A refrigerant leakage velocity on the liquid-side line, that is, the refrigerant leakage velocity ($G_{rL}$) at the liquid-side cutoff valve is initially obtained in accordance with the Bernoulli's theorem assuming that a leakage hole serves as an orifice and a refrigerant in a liquid phase passes the leakage hole, by

(Formula 4):

$$G_{rL} = C_r \times (2 \times \Delta P_r / \rho_{1rl})^{0.5} \times A_{vL} \times \rho_{1rl}.$$

Next, the refrigerant leakage velocity on the gas-side line, that is, the refrigerant leakage velocity ($G_{rG}$) at the gas-side cutoff valve exceeds the sound velocity. The specific heat ratio $\kappa$ is assumed to have a representative value equal to a value of saturated gas of the refrigerant at 20°C. The refrigerant leakage velocity ($G_{rG}$) on the gas-side line is obtained by

(Formula 5):

$$G_{rG} = A_{vG} \times (2/(\lambda + 1))^{((\lambda + 1)/2(\lambda - 1))} \times (\lambda \times P_{1r} \times \rho_{1rg})^{0.5}.$$

When both the liquid-side cutoff valve and the gas-side cutoff valve are closed, the leakage velocity $G_r$ of the refrigerant flowing into the predetermined space is obtained by

(Formula 6):

$$G_r = G_{rL} + G_{rG} = C_r \times (2 \times \Delta P_r / \rho_{1rl})^{0.5} \times A_{vL} \times \rho_{1rl} + A_{vG} \times (2/(\lambda + 1))^{((\lambda + 1)/2(\lambda - 1))} \times (\lambda \times P_{1r} \times \rho_{1rg})^{0.5}.$$

Examples of variables influencing the leakage velocity of refrigerant through the valve clearance of the cutoff valve include (4-2-2-A) to (4-2-2-E). The variables are calculated in the following manners.

(4-2-2-A) Refrigerant Type

The refrigerant is assumed to be selected from R32, R452B, R454B, R1234yf, and R1234ze(E), and each of the refrigerants has a physical property value calculated in accordance with NIST Refprop V9.1.

(4-2-2-B) Ambient Temperature Determining Refrigerant Pressure Upstream of Cutoff Valve After Air Conditioner Stops, and Differential Pressure between Refrigerant Pressure and Atmospheric Pressure

After the air conditioner stops, a pressure of the refrigerant closer to the heat source-side unit (upstream) than to the cutoff valve can be assumed to be determined by a maximum temperature outside an architecture. In accordance with high temperature test conditions for air conditioners in the U.S. (Table 1 below), the maximum outside temperature is set to 55°C and a refrigerant pressure upstream of the cutoff valve is set to a saturation pressure at 55°C.

[Table 1]

| Test condition | Outdoor [a] | Indoor | | | |
|---|---|---|---|---|---|
| | Dry-bulb temperature | Dry-bulb temperature | Wet-bulb temperature | Dew point temperature [b] | Relative humidity [b] |
| | °C (°F) | °C (°F) | °C (°F) | °C (°F) | % |
| AHRI B [c] | 27.8 (82) | 26.7 (80.0) | 19.4 (67) | 15.8 (60.4) | 50.9 |
| AHRI A [c] | 35.0 (95) | 26.7 (80.0) | 19.4 (67) | 15.8 (60.4) | 50.9 |
| T3 * [d] | 46 (114.8) | 26.7 (80.0) | 19 (66.2) | 15.8 (60.4) | 50.9 |
| T3 | 46 (114.8) | 29 (84.2) | 19 (66.2) | 13.7 (56.6) | 39 |
| Hot | 52 (125.6) | 29 (84.2) | 19 (66.2) | 13.7 (56.6) | 39 |
| Extreme | 55 (131) | 29 (84.2) | 19 (66.2) | 13.7 (56.6) | 39 |

[a] There is no specification for the outdoor relative humidity as it has no impact on the performance.
[b] Dew-point temperature and relative humidity evaluated at 0.973 atm (14.3 psi)
[c] Per AHRI Standard 210/240
[d] T3 * is a modified T3 condition in which the indoor settings are similar to the AHRI conditions.

Source:

Alternative Refrigerant Evaluation for High-Ambient-Temperature Environments: R-22 and R-410A Alternatives for Mini-Split Air Conditioners, ORNL, P5, 2015

(4-2-2-C) Liquid Density and Gas Density

A density ($kg/m^3$) of a liquid-phase refrigerant and a density ($kg/m^3$) of a gas-phase refrigerant are calculated in accordance with NIST Refprop V9.1.

(4-2-2-D) Specific Heat Ratio

The specific heat ratio is calculated in accordance with NIST Refprop V9.1. Adopted is a specific heat ratio of saturated gas of the refrigerant at 27°C.

(4-2-2-E) Refrigerant States on Liquid-Side Line and Gas-Side Line

Assumed after the cutoff valve is brought into the cutoff state are whether the refrigerant on the liquid-side line and the refrigerant on the gas-side line upstream of the cutoff valve are in the liquid phase and in the gas phase or are in the gas phase and in the gas phase, respectively. Calculation is made assuming the former case where a calculated refrigerant leakage velocity is higher. In other words, calculation is made after the cutoff valve is brought into the cutoff state, assuming that the refrigerant on the liquid-side line upstream of the cutoff valve is in the liquid phase and the refrigerant on the gas-side line upstream of the cutoff valve is in the gas phase.
When the variables are calculated as described above, the leakage velocity of each refrigerant leaking from the valve clearance is indicated in Table 2 below.

[Table 2]

| Leakage Velocity of Refrigerant through Valve Clearance When Cutoff Valve is Closed | | | | | | | |
|---|---|---|---|---|---|---|---|
| Refrigerant | Refrigerant pressure $P_{1r}$ [Mpa] | Liquid density $\rho_{1rl}$ [kg/m3] | Gas density $\rho_{1rg}$ [kg/m3] | Specific heat ratio $\lambda$ [-] | Liquid-side leakage velocity $G_{rL}$ [kg/h] | Gas-side leakage velocity $G_{rG}$ [kg/h] | Sum of leakage velocities $G_r$ [kg/h] |
| R32 | 3.52 | 808 | 115.0 | 1.71 | 0.377 | 0.125 | 0.502 |
| R1234yf | 1.46 | 967 | 87.0 | 1.21 | 0.261 | 0.062 | 0.323 |

(continued)

| Leakage Velocity of Refrigerant through Valve Clearance When Cutoff Valve is Closed | | | | | | | |
| --- | --- | --- | --- | --- | --- | --- | --- |
| Refrigerant | Refrigerant pressure $P_{1r}$ [Mpa] | Liquid density $\rho_{1rl}$ [kg/m3] | Gas density $\rho_{1rg}$ [kg/m3] | Specific heat ratio λ [-] | Liquid-side leakage velocity $G_{rL}$ [kg/h] | Gas-side leakage velocity $G_{rG}$ [kg/h] | Sum of leakage velocities $G_r$ [kg/h] |
| R1234(E) | 1.13 | 1054 | 61.3 | 1.17 | 0.236 | 0.045 | 0.282 |
| R452B | 3.08 | 854 | 106.0 | 1.88 | 0.362 | 0.115 | 0.477 |
| R454B | 3.00 | 853 | 99.4 | 1.87 | 0.357 | 0.110 | 0.467 |
| Condition) The ambient temperature is 55 [°C], the cutoff valve clearance corresponds to 300 [cc/min], and the specific heat ratio is 27 [°C]. | | | | | | | |

Refrigerant leakage velocities at varied ambient temperatures (temperatures outside an architecture) can be obtained in accordance with (Formula 4), (Formula 5), and (Formula 6) by varying the physical property values. The refrigerant leakage velocity tends to be higher as the ambient temperature is higher. Cutoff valves adapted to various regions can thus be selected or designed by obtaining the refrigerant leakage velocities in accordance with conditions of outside temperatures (maximum outside temperatures) in the various regions.

(4-2-3) Calculation of Refrigerant Leakage Velocity According to Second Calculation Method

Formulae when the leakage rates at the gas-side cutoff valve and the liquid-side cutoff valve are calculated using the Cv value representing the leakage rate unique to each valve is as follows.
When the leakage rate at the gas-side cutoff valve is obtained using the Cv value,

(Formula 7):

$$Cv = Q \times 3600 \times (\rho/\rho_a \times (273 + 20))^{0.5}/(2519 \times P1/1000000).$$

When the leakage rate at the liquid-side cutoff valve is obtained using the Cv value,

(Formula 8):

$$Cv = 0.02194 \times Q \times 1000 \times 60 \times (\rho/1000/\Delta p/1000000)^{0.5}.$$

In the above guideline, the leakage rates at the gas-side cutoff valve and the liquid-side cutoff valve are 300 ($cm^3$/min) or less when the fluid is air and the differential pressure between upstream and downstream of each of the gas-side cutoff valve and the liquid-side cutoff valve is 1 MPa. Therefore, when using (Formula 7), Cv = 1.11 $\times$ $10^{-4}$.
The leakage velocities of the gas refrigerant and the liquid refrigerant can be calculated by using the Cv value in accordance with (Formula 7) and (Formula 8).
(4-3) The refrigerant leakage velocities through the valve clearances assumed in the above guideline can be obtained by the calculation made in (4-1) to (4-2). Next, how much the cutoff leakage rate at the gas-side cutoff valve can be increased is calculated on the basis of the refrigerant leakage velocities. In addition, how much the cutoff leakage rate at the liquid-side cutoff valve is appropriately reduced with the increase in the cutoff leakage rate at the gas-side cutoff valve is calculated. Therefore, the cutoff leakage rate at each of the gas-side cutoff valve and the liquid-side cutoff valve is changed from 300 ($cm^3$/min) and designed or selected so that the sum of the refrigerant leakage velocities at the gas-side cutoff valve and the liquid-side cutoff valve is equivalent to the sum of the refrigerant leakage velocities in a case where the same valve clearance is assumed for both the gas-side cutoff valve and the liquid-side cutoff valve according to the above guideline.
In this case, the change in the refrigerant leakage velocities at the gas-side cutoff valve and the liquid-side cutoff valve is as illustrated in FIG. 6.
When the cutoff leakage rates at the gas-side cutoff valve and the liquid-side cutoff valve are changed, the refrigerant leakage velocity at the gas-side cutoff valve increases from $g_0$ to $g_{00}$, and the refrigerant leakage velocity at the liquid-side cutoff valve decreases from $l_0$ to $l_{00}$. Here, a ratio of the refrigerant leakage velocity at the liquid-side cutoff valve to the refrigerant leakage velocity at the gas-side cutoff valve before changing the cutoff leakage rates at the gas-side cutoff valve and the liquid-side cutoff valve is as follows:

$$(Formula\ 9): \quad l_0/g_0 = X.$$

A ratio of the refrigerant leakage velocity at the gas-side cutoff valve after changing the cutoff leakage rate to the refrigerant leakage velocity at the gas-side cutoff valve before changing the cutoff leakage rate is calculated as follows:

$$(Formula\ 10): \quad g_{00}/g_0 = Y.$$

In a case where it is assumed that the sum of the refrigerant leakage velocities at the liquid-side cutoff valve and the gas-side cutoff valve does not change before and after changing the cutoff leakage rates,

$$(Formula\ 11): \quad l_0 - l_{00} = g_{00} - g_0.$$

When (Formula 11) is deformed using (Formula 9) and (Formula 10),

$$(Formula\ 12): \quad l_{00} = (X - Y + 1) \times g_0.$$

Therefore, the change in the refrigerant leakage velocity at the liquid-side cutoff valve can be obtained by the following formula:

$$(Formula\ 13): \quad l_{00}/l_0 = 1 - (Y - 1)/X.$$

Table 3 shows a pipe diameter of the gas-refrigerant connection pipe diameter and a pipe diameter of the liquid-refrigerant connection pipe.

[Table 3]

| Capability [* 100 W] | Outer diameter of liquid pipe [mm] | Outer diameter of gas pipe [mm] | Ratio between pipe diameters of gas pipe and liquid pipe |
|---|---|---|---|
| 40 | 6.4 | 12.7 | 1.98 |
| 45 | 6.4 | 12.7 | 1.98 |
| 50 | 6.4 | 12.7 | 1.98 |
| 56 | 6.4 | 12.7 | 1.98 |
| 63 | 6.4 | 12.7 | 1.98 |
| 80 | 9.5 | 15.9 | 1.67 |
| 112 | 9.5 | 15.9 | 1.67 |
| 140 | 9.5 | 15.9 | 1.67 |
| 160 | 9.5 | 15.9 | 1.67 |
| 224 | 9.5 | 25.4 | 2.67 |
| 280 | 12.7 | 25.4 | 2.00 |

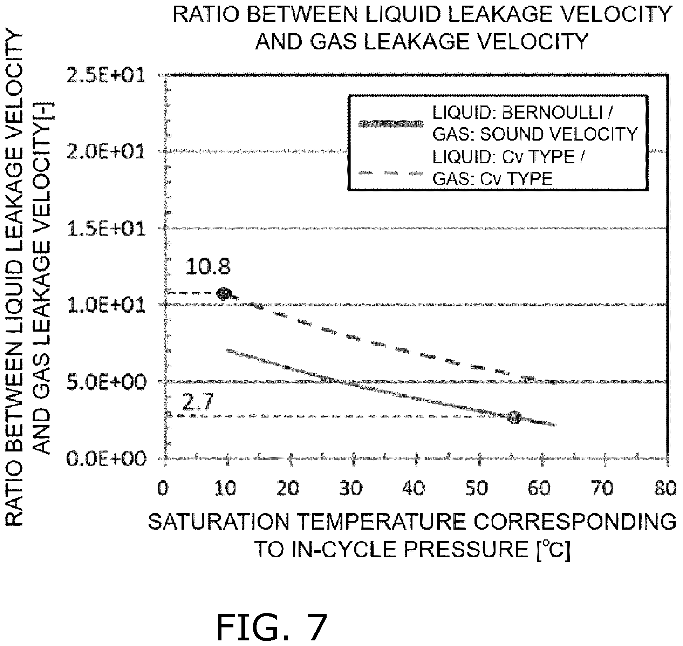

As shown in the item of gas/liquid-side pipe diameter in Table 3, a ratio between the pipe diameter of the gas-side refrigerant connection pipe to the pipe diameter of the liquid-side refrigerant connection pipe is in a range of about 1.6 times to about 2.7 times. The cutoff leakage rate at the gas-side cutoff valve with respect to the cutoff leakage rate at the liquid-side cutoff valve increases in proportion to the ratio between the pipe diameters of the refrigerant connection pipes. FIG. 7 illustrates X that is a ratio of the refrigerant leakage velocity at the liquid-side cutoff valve to the refrigerant leakage velocity at the gas-side cutoff valve. When a pressure in a refrigerant cycle is changed in a range from a saturation pressure at 10°C to a saturation pressure at 55°C, X is changed in a range of 2.7 times to 10.8 times.

Here, when Y = 1.6, $l_{00}/l_0$ = 1 - 0.6/X in accordance with Formula (13), and at this time, when X is changed in a range of 2.7 times to 10.8 times, $l_{00}/l_0$ indicating the change in the refrigerant leakage velocity at the liquid-side cutoff valve is changed in a range of 0.78 times to 0.94 times. Therefore, in this case, a maximum cutoff leakage rate at the liquid-side cutoff valve may be designed or selected in a range of 0.78 times to 0.94 times of 300 ($cm^3$/min).

Similarly, when Y = 2.7, $l_{00}/l_0$ = 1 - 1.7/X in accordance with the Formula (13), and at this time, when X is changed in a range of 2.7 times to 10.8 times, $l_{00}/l_0$ indicating the change in the refrigerant leakage velocity an the liquid-side cutoff valve is changed in a range of 0.37 times to 0.84 times. Therefore, in this case, the maximum cutoff leakage rate at the liquid-side cutoff valve may be designed or selected in a range of 0.37 times to 0.84 times of 300 ($cm^3$/min).

These results show that when the refrigerant leakage velocity at the gas-side cutoff valve is changed in a range of 1.6 times to 2.7 times, $l_{00}/l_0$, which is the change in the refrigerant leakage velocity at the liquid-side cutoff valve, is changed in a range of 0.37 times to 0.94 times.

As described above, the cutoff leakage rate at the gas-side cutoff valve can be increased in a range of 1.0 times to 2.7 times or less of 300 ($cm^3$/min) which is the cutoff leakage rate prescribed in the above guideline. In this case, the cutoff leakage rate at the liquid-side cutoff valve is set within a range of 0.94 times or less of 300 ($cm^3$/min) which is the cutoff leakage rate prescribed in the above guideline.

As long as the cutoff leakage rates at the gas-side cutoff valve and the liquid-side cutoff valve are changed within this range, the sum of the refrigerant leakage velocities at the gas-side cutoff valve and the liquid-side cutoff valve is equivalent to the sum of the refrigerant leakage velocities in a case where the same valve clearance is assumed for both the gas-side cutoff valve and the liquid-side cutoff valve according to the above guideline.

In a case where the design or selection is made more appropriately, when the cutoff leakage rate at the gas-side cutoff valve is changed in a range of 1.6 times to 2.7 times of 300 ($cm^3$/min) which is the cutoff leakage rate prescribed in the above guideline, the cutoff leakage rate at the liquid-side cutoff valve is changed in a range of 0.37 times to 0.94 times of 300 ($cm^3$/min) which is the cutoff leakage rate prescribed in the above guideline.

(4-4) Next, it is assumed that a door is installed in a predetermined space (room) in which the utilization-side unit of the air conditioner is installed. There is a clearance below the door, and it is considered that the leaking refrigerant is discharged to the outside of the room through the clearance below the door. Based on the above, the refrigerant leakage velocity at the cutoff valve is set.

First, a refrigerant discharge velocity $G_d$ of the refrigerant discharged to the outside of the room through the clearance below the door is calculated.

$$(\text{Formula 14}): \quad G_d = \rho_{md} \times V_{md} \times A_d$$

$$(\text{Formula 15}): \quad V_{md} = C_d \times (2 \times \Delta p_d/\rho_{md})^{0.5}$$

$$(\text{Formula 16}): \quad \Delta p_d = (\rho_{md} - \rho_a) \times g \times h_s$$

$$(\text{Formula 17}): \quad \rho_{md} = \rho_{mr} + \rho_{ma}$$

$$(\text{Formula 18}): \quad \rho_{mr} = N/100 \times (U_r \times 10^{-3})/(24.5 \times 10^{-3})$$

$$(\text{Formula 19}): \quad \rho_{ma} = (100 - N)/100 \times (U_a \times 10^{-3})/(24.5 \times 10^{-3})$$

$$(\text{Formula 20}): \quad N = LFL/S$$

Examples of variables influencing the refrigerant discharge velocity include (4-4-1-A) and (4-4-1-B).

(4-4-1-A) Leakage Height

(4-4-1-B) Safety Coefficient for Lower Flammability Limit (LFL) of Average Refrigerant Concentration in Room (Predetermined Space)

A leakage height is a position of the first portion in the predetermined space when the refrigerant leaks into the predetermined space. The leakage height is 2.2 m or the like when the utilization-side unit is installed at the ceiling and is 0.6 m or the like when the utilization-side unit is placed on the floor (see IEC60335-2-40: 2016). A tolerable average concentration is an average concentration of the refrigerant leaking into the predetermined space, and is a refrigerant concentration in a range where it is recognized that there is no risk of combustion of the refrigerant leaking into the predetermined space. The tolerable average concentration is obtained by dividing a LFL by a safety coefficient. The refrigerant discharge velocity is influenced by the safety coefficient set to 4 or 2, as exemplarily indicated by Table 4 below.

[Table 4]

| Refrigerant discharge velocity Gd [kg/h] of refrigerant discharged to outside of room through clearance below door | | | | | |
|---|---|---|---|---|---|
| Tolerable average concentration | | 1/4 LFL | 1/4 LFL | 1/2 LFL | 1/2 LFL |
| Leakage height | | 2.2 m | 0.6 m | 2.2 m | 0.6 m |
| Refrigerant | R32 | 0.983 | 0.513 | 2.714 | 1.417 |
| | R1234yf | 1.152 | 0.594 | 3.149 | 1.645 |
| | R1234ze(E) | 1.220 | 0.637 | 3.374 | 1.762 |
| | R452B | 1.092 | 0.570 | 3.036 | 1.586 |
| | R454B | 1.063 | 0.555 | 2.957 | 1.544 |

(4-4-2) Calculated next is a maximum cutoff leakage rate ($Q_{max}$) of the cutoff valve in the cutoff state in a case where the door is provided therebelow with the clearance.

When the refrigerant discharge velocity $G_d$ of the refrigerant discharged to the outside of the room (predetermined space) through the clearance below the door is higher than the refrigerant leakage velocity $G_r$ through the valve clearance when the cutoff valve is in the cutoff state, the cutoff leakage rate can be made higher than 300 ($cm^3$/min). As mentioned above in (4-2-1), if the gas-side cutoff valve and the liquid-side cutoff valve are set to have the identical maximum tolerable cutoff leakage rate ($Q_{max}$), a multiplying factor R for 300 ($cm^3$/min) specified in the guideline of The Japan Refrigeration and Air Conditioning Industry Association is identical for the gas-side cutoff valve and the liquid-side cutoff valve.

$$\text{(Formula 21):} \quad R = G_d/G_r$$

$$\text{(Formula 22):} \quad Q_{max} = 300 \times R$$

Assume herein that, before the cutoff valves are brought into the cutoff state, a refrigerant in a liquid phase is provided upstream of the cutoff valve on the liquid-side line, and a refrigerant in a gas phase is provided upstream of the cutoff valve on the gas-side line. (Formula 23) is obtained by substituting (Formula 6) and (Formula 15) in (Formula 22).

$$\text{(Formula 23):}$$
$$R = (\rho_{md} \times V_{md} \times A_d)/(C_r \times (2 \times \Delta P_r/\rho_{1r})^{0.5} \times A_v \times \rho_{1rl}$$
$$+ A_v \times (2/(\lambda + 1))^{((\lambda + 1)/2(\lambda - 1))} \times (\lambda \times P_{1r} \times \rho_{1rg})^{0.5})$$

The tolerable multiplying factor R for each of the refrigerants is obtained in accordance with (Formula 23), as exemplarily indicated in Table 5.

[Table 5]

| Tolerable multiplier R for maximum tolerable air leakage rate Qv | | | | | |
|---|---|---|---|---|---|
| Tolerable average concentration | | 1/4LFL | 1/4LFL | 1/2LFL | 1/2LFL |
| Leakage height | | 2.2 m | 0.6 m | 2.2 m | 0.6 m |
| Refrigerant | R32 | 1.96 | 1.02 | 5.41 | 2.83 |
| | R1234yf | 3.57 | 1.84 | 9.76 | 5.10 |
| | R1234ze(E) | 4.33 | 2.26 | 11.98 | 6.26 |
| | R452B | 2.29 | 1.20 | 6.37 | 3.32 |
| | R454B | 2.28 | 1.19 | 6.33 | 3.31 |

(4-4-3) Described above is calculation of the cutoff leakage rate and the like. Symbols and the like included in the formulae indicate as follows in (4-4-3-1) to (4-4-3-3) unless otherwise specified.

(4-4-3-1) Symbols

A: area ($m^2$ as unit)
C: flow rate coefficient
d: equivalent diameter (m as unit)
G: mass flow rate velocity ($kg \cdot s^{-1}$ as unit)
g: gravitational acceleration ($m \cdot s^{-2}$ as unit)
h: leakage height (m as unit)
L: refrigerant lower flammable limit (LFL) ($kg \cdot m^{-3}$ as unit)
N: refrigerant volume concentration (vol% as unit)
P: pressure (Pa as unit)
Q: volume flow rate velocity ($m^3 \cdot s^{-1}$ as unit)
R: tolerable multiplier for valve leakage rate
$\Delta p$: differential pressure (Pa as unit)
S: safety coefficient
U: refrigerant molecular weight
v: velocity ($m \cdot s^{-1}$ as unit)
X: ratio of refrigerant leakage velocity at liquid-side cutoff valve to refrigerant leakage velocity at gas-side cutoff valve
Y: ratio of refrigerant leakage velocity at gas-side cutoff valve before change to refrigerant leakage velocity at gas-side cutoff valve after change

(4-4-3-2) Greek Letters

$\kappa$: air specific heat ratio
$\lambda$: refrigerant specific heat ratio
$\rho$: mass concentration ($kg \cdot m^{-3}$ as unit)

(4-4-3-3) Subscripts

$_a$: air
$_d$: clearance below door
$_g$: gas phase
$_l$: liquid phase
$_m$: mixture of refrigerant and air
$_r$: refrigerant

$_s$: refrigerant leakage point
$_v$: cutoff valve
$_G$: gas-side line
$_L$: liquid-side line
$_1$: upstream
$_2$: downstream
$_{max}$: tolerance
$_0$: before change
$_{00}$: after change

(5) Characteristics of Air Conditioner

(5-1) In "guideline of design construction for ensuring safety against refrigerant leakage from commercial air conditioners using mild flammability (A2L) refrigerants (JRA GL-16: 2017)", which is the guideline of The Japan Refrigeration and Air Conditioning Industry Association issued on September 1, 2017, "Annex A (Prescription) Specifications of safety cutoff valves" is prepared. In "Annex A (Prescription) Specifications of safety cutoff valves", when the fluid is air and the differential pressure between upstream and downstream of each of the gas-side cutoff valve and the liquid-side cutoff valve is 1 MPa, 300 ($cm^3$/min) is prescribed as the cutoff leakage rate to be satisfied by the gas-side cutoff valve and the liquid-side cutoff valve.

The gas-side cutoff valve generally has a large valve diameter, and thus, the cutoff leakage rate at the same differential pressure tends to be high. On the other hand, the liquid-side cutoff valve generally has a small valve diameter, and the cutoff leakage rate at the same differential pressure tends to be low. In the above guideline, it is required to uniformly suppress the cutoff leakage rate to 300 ($cm^3$/min) or less regardless of the gas-side cutoff valve and the liquid-side cutoff valve. However, designing or selecting a gas-side cutoff valve having a valve diameter larger than the valve diameter of the liquid-side cutoff valve so that the cutoff leakage rate is equivalent to the cutoff leakage rate at the liquid-side cutoff valve leads to an increase in manufacturing or purchase costs.

The refrigerant leakage velocity assumed in the guideline can be calculated from the cutoff leakage rate prescribed in the above guideline. Further, as illustrated in FIG. 6, since the state of the target refrigerant is different, in the same valve clearance, the refrigerant leakage velocity at the liquid-side cutoff valve is higher than the refrigerant leakage velocity at the gas-side cutoff valve. In other words, when the cutoff leakage rate at the gas-side cutoff valve and the cutoff leakage rate at the liquid-side cutoff valve are the same as each other, the refrigerant leakage velocity at the liquid-side cutoff valve is higher than that at the gas-side cutoff valve, and thus a large amount of refrigerant leaks into the predetermined space.

In view of this, in the present embodiment, the cutoff leakage rates at the gas-side cutoff valves 68a, 68b, 68c, and 68d are made higher than those at the liquid-side cutoff valves 71a, 71b, 71c, and 71d.

As a result, even in a case where the refrigerant leakage velocity at the gas-side cutoff valves 68a, 68b, 68c, and 68d increase, the refrigerant leakage velocity at the liquid-side cutoff valves 71a, 71b, 71c, and 71d decrease, such that it is possible to satisfy the cutoff leakage rate prescribed in the above guideline. Therefore, it is possible to reduce the manufacturing cost of the gas-side cutoff valves 68a, 68b, 68c, and 68d while ensuring safety.

(5-2) In the present embodiment, those at which the cutoff leakage rate is higher than 300 × R ($cm^3$/min) are adopted as the gas-side cutoff valves 68a, 68b, 68c, and 68d. On the other hand, those at which the cutoff leakage rate is lower than 300 × R ($cm^3$/min) are adopted as the liquid-side cutoff valves 71a, 71b, 71c, and 71d. Accordingly, it is possible to reduce the manufacturing cost of the gas-side cutoff valves 68a, 68b, 68c, and 68d while ensuring safety. Here, R calculated in (4-4) is taken into consideration when changing the cutoff leakage rates at the liquid-side cutoff valve and the gas-side cutoff valve. Therefore, it is possible to reduce the manufacturing cost of the gas-side cutoff valves 68a, 68b, 68c, and 68d while ensuring safety.

(5-3) In the above guideline, it is required to uniformly suppress the cutoff leakage rates at the gas-side cutoff valve and the liquid-side cutoff valve to 300 ($cm^3$/min) or less. However, in this case, manufacturing or purchasing the gas-side cutoff valve having a relatively large valve diameter results in an increase in cost. Therefore, in the present embodiment, the cutoff leakage rate at each of the gas-side cutoff valves 68a, 68b, 68c, and 68d and the liquid-side cutoff valves 71a, 71b, 71c, and 71d are changed from 300×R ($cm^3$/min) and designed or selected so that the refrigerant leakage velocities at the gas-side cutoff valves 68a, 68b, 68c, and 68d and the liquid-side cutoff valves 71a, 71b, 71c, and 71d are equivalent to the sum of the refrigerant leakage velocities in a case where the same valve clearance is assumed for both the gas-side cutoff valve and the liquid-side cutoff valve according to the above guideline.

According to the calculation shown in (4-3), when the cutoff leakage rates at the gas-side cutoff valves 68a, 68b, 68c, and 68d are changed to 1.0 times to 2.7 times or less of 300 (cm$^3$/min) and designed or selected, the cutoff leakage rates at the liquid-side cutoff valves 71a, 71b, 71c, and 71d are changed to 0.94 times or less of 300 (cm$^3$/min) and designed or selected.

R calculated in (4-4) is further considered for numerical values of the cutoff leakage rates at the gas-side cutoff valve and the liquid-side cutoff valve selected in this manner.

As described above, when the cutoff leakage rates at the gas-side cutoff valves are changed to 1.0 times to 2.7 times or less of 300 × R (cm$^3$/min) and designed or selected, the cutoff leakage rates at the liquid-side cutoff valves 71a, 71b, 71c, and 71d are changed to 0.94 times or less of 300 × R (cm$^3$/min) and designed or selected. At this time, the refrigerant leakage velocities at the gas-side cutoff valves 68a, 68b, 68c, and 68d and the liquid-side cutoff valves 71a, 71b, 71c, and 71d are equivalent to the sum of the refrigerant leakage velocities in a case where the same valve clearance is assumed for the gas-side cutoff valves 68a, 68b, 68c, and 68d and the liquid-side cutoff valves 71a, 71b, 71c, and 71d according to the above guideline.

In this manner, even when the cutoff leakage rates at the gas-side cutoff valves 68a, 68b, 68c, and 68d exceed the cutoff leakage rate of 300 (cm$^3$/min) prescribed in the above guideline, the cutoff leakage rates at the liquid-side cutoff valves 71a, 71b, 71c, and 71d are designed or selected so as to compensate for the exceeding cutoff leakage rate. As a result, it is possible to suppress an increase in cost for manufacturing or purchase of the gas-side cutoff valves 68a, 68b, 68c, and 68d while ensuring safety.

More appropriately, the liquid-side cutoff valves 71a, 71b, 71c, and 71d are designed or selected so that when the cutoff leakage rates at the gas-side cutoff valves 68a, 68b, 68c, and 68d are in a range of 1.6 times to 2.7 times of 300 × R (cm$^3$/min), the cutoff leakage rates at the liquid-side cutoff valves 71a, 71b, 71c, and 71d are in a range of 0.37 times to 0.94 times of 300 × R (cm$^3$/min).

(5-4) In the air conditioner 1, the maximum cutoff leakage rate required for the cutoff valve is calculated in the manner mentioned above in (4-3) to (4-4-2) in accordance with the conditions such as the size of the room (predetermined space) SP equipped with the utilization-side units 3a, 3b, 3c, and 3d (the size of the clearance UC below the door DR or the height of the ceiling), the type of the refrigerant (R32), and the places equipped with the utilization-side units 3a, 3b, 3c, and 3d (installed at the ceiling instead of being placed on the floor), to determine the specifications of the liquid-side cutoff valves 71a, 71b, 71c, and 71d and the gas-side cutoff valves 68a, 68b, 68c, and 68d. Specifically, calculated is the multiplying factor R for 300 (cm$^3$/min) as a reference value of the cutoff leakage rate in the specifications prescribed by the Annex A of the guideline, as to how much the tolerable rate can be increased for 300(cm$^3$/min). The specific numerical value of the multiplying factor R is obtained as indicated in Table 5. Herein, in the case where R32 is adopted as the refrigerant, the utilization-side units 3a, 3b, 3c, and 3d are installed at the ceiling of the room SP, and the safety coefficient S is set to 4, the multiplying factor R is 1.96 as indicated in Table 5.

In accordance with the multiplying factor R, the specifications of the liquid-side cutoff valves 71a, 71b, 71c, and 71d and the gas-side cutoff valves 68a, 68b, 68c, and 68d are determined in the air conditioner 1 so that the maximum cutoff leakage rate is 300 × 1.96 (cm$^3$/min) or less. In comparison to the case where the specifications are determined in accordance with 300 (cm$^3$/min) as the reference value, the liquid-side cutoff valves 71a, 71b, 71c, and 71d and the gas-side cutoff valves 68a, 68b, 68c, and 68d are reduced in manufacturing cost or purchase cost, to reduce introduction cost for the air conditioner 1 using the refrigerant (R32) capable of preventing global warming.

Also in the air conditioner 1 including the liquid-side cutoff valves 71a, 71b, 71c, and 71d and the gas-side cutoff valves 68a, 68b, 68c, and 68d having the specifications thus determined, quantity of the refrigerant flowing out of the room SP through the valve clearance of each of the liquid-side cutoff valve 71a and the gas-side cutoff valve 68a after the air conditioner 1 stops in Step S7 in FIG. 5 is suppressed to allow the refrigerant concentration to be kept sufficiently lower than the LFL in the room SP.

(5-5) The multiplying factor R for calculating how much the tolerable rate can be increased for the reference value of the cutoff leakage rate such as 300 (cm$^3$/min) in the specification prescribed in the Annex A of the above guideline is determined based on at least one of the tolerable average concentration, the leakage height, or the type of the refrigerant.

As described in (4-4-1-A), the leakage height is the position of the first portion in the predetermined space SP when the refrigerant leaks into the predetermined space SP. The leakage height is 2.2 m or the like when the utilization-side unit is installed at the ceiling and is 0.6 m or the like when the utilization-side unit is placed on the floor (see IEC60335-2-40: 2016).

As described in (4-4-1-B), the tolerable average concentration is an average concentration of the refrigerant leaking into the predetermined space SP, and is a refrigerant concentration in a range where it is recognized that there is no risk of combustion of the refrigerant leaking into the predetermined space SP. The tolerable average concentration is obtained by dividing the LFL by the safety factor.

The type of the refrigerant refers to the type of the refrigerant belonging to any of the following: a mildly flammable refrigerant determined as "Class 2L" according to ANSI/ASHRAE Standard 34-2013; a less flammable refrigerant determined as "Class 2" according to ANSI/ASHRAE Standard 34-2013; and a highly flammable refrigerant determined as "Class 3" according to ANSI/ASHRAE Standard 34-2013.

The multiplying factor R is determined based on at least any one of these, and, specifically, has a numerical value in a range of 1.02 to 11.98 as shown in Table 5. As a result, the specification of the cutoff leakage rate to be satisfied by the gas-side cutoff valve and the liquid-side cutoff valve can be obtained.

(5-6) It is also possible to design or select the gas-side cutoff valves 68a, 68b, 68c, and 68d and the liquid-side cutoff valves 71a, 71b, 71c, and 71d by simply calculating the cutoff leakage rates at the gas-side cutoff valves 68a, 68b, 68c, and 68d and the liquid-side cutoff valves 71a, 71b, 71c, and 71d with R of 1 (R = 1) without calculating the numerical value of the multiplying factor R as described above in consideration of a case where the predetermined space SP does not have the clearance UC below the door DR.

(6) Modified Example

(6-1) The air conditioner 1 according to the embodiment described above is installed in a room (predetermined space SP) of an architecture such as a building. When the air conditioner 1 is installed in a space in a different architecture, designing or selection of the specifications of the cutoff valve may be changed in accordance with conditions of the predetermined space SP. Appropriate cutoff valves can be designed or selected for various spaces such as a space in a plant, a kitchen, a data sensor, a computer room, and a space in a commercial facility.

(6-2) The above embodiment exemplifies R32 as the refrigerant circulating in the refrigerant circuit 10 of the air conditioner 1. When another flammable refrigerant is adopted, the multiplying factor R is calculated in accordance with a difference in condition such as a refrigerant molecular weight or the LFL as described above, for designing or selection of specifications of the liquid-side cutoff valves 71a, 71b, 71c, and 71d and the gas side cutoff valves 68a, 68b, 68c, and 68d appropriate for the multiplying factor R.

(6-3) The above embodiment exemplifies the control flow illustrated in FIG. 5 as the operation of the air conditioner 1 upon refrigerant leakage. The air conditioner 1 can alternatively adopt different operation as operation upon refrigerant leakage. Alternatively, pumping down operation may be performed upon detection of refrigerant leakage, and the cutoff valve may then be controlled to be closed.

(6-4) In the above embodiment, in Step S4 and Step S5, the utilization-side units 3a, 3b, 3c, and 3d perform the cooling operation and the heat source-side expansion valve 25 is decreased in opening degree to decrease a pressure of the refrigerant flowing to the utilization-side units 3a, 3b, 3c, and 3d. This control is merely exemplary and may alternatively be replaced with different control.

Upon detection of refrigerant leakage into the predetermined space SP equipped with the utilization-side unit 3a, only the liquid-side cutoff valve 71a and the gas-side cutoff valve 68a of the relay unit 4a corresponding to the utilization-side unit 3a may alternatively be closed immediately.

Upon detection of refrigerant leakage into the predetermined space SP equipped with the utilization-side unit 3a, there may still alternatively be adopted control to close all the liquid-side cutoff valves 71a, 71b, 71c, and 71d and the gas-side cutoff valves 68a, 68b, 68c, and 68d to separate all the utilization-side units 3a, 3b, 3c, and 3d from the heat source-side unit 2, as well as stopping the compressor 21 of the heat source-side unit 2.

(6-5) The above embodiment exemplifies, as the utilization-side unit, the utilization-side units 3a, 3b, 3c, and 3d installed to be buried in the ceiling. The cutoff valve is designed or selected in a similar manner even with any utilization-side unit in a different form. The multiplying factor R can be obtained in accordance with (Formula 23) even when the utilization-side unit is of a ceiling pendant type, of a floor placement type, of a wall mounted type to be mounted on a side wall, or the like.

(6-6) The gas-side cutoff valve generally has a large valve diameter, and thus, the cutoff leakage rate at the same differential pressure tends to be high. On the other hand, the liquid-side cutoff valve generally has a small valve diameter, and the cutoff leakage rate at the same differential pressure tends to be low. Therefore, in the above embodiment, it has been assumed that the valve diameters of the gas-side cutoff valves 68a, 68b, 68c, and 68d are larger than the valve diameters of the liquid-side cutoff valves 71a, 71b, 71c, and 71d. However, even in a case where the valve diameters of the liquid-side cutoff valves 71a, 71b, 71c, and 71d are equal to or larger than the valve diameters of the gas-side cutoff valves 68a, 68b, 68c, and 68d, the cutoff leakage rates at the gas-side cutoff valves 68a, 68b, 68c, and 68d are made higher than the cutoff leakage rate prescribed in the above guideline, and the cutoff leakage rates at the liquid-side cutoff valves 71a, 71b, 71c, and 71d are made lower than the cutoff leakage rate prescribed in the above guideline, such that the refrigerant leakage velocity can be suppressed to be equal to or lower than the refrigerant leakage velocity assumed in the above guideline. In addition to a mode in which the gas-side cutoff valves 68a, 68b, 68c, and 68d and the liquid-side cutoff valves 71a, 71b, 71c, and 71d are installed one by one, a mode in which two gas-side cutoff valves and one liquid-side cutoff valve are installed is also conceivable.

(6-7) In the present embodiment, the cutoff leakage rates at the gas-side cutoff valves 68a, 68b, 68c, and 68d and the liquid-side cutoff valves 71a, 71b, 71c, and 71d are evaluated using "air" as the gas that is in the single gas phase in the standard state. However, the gas for evaluating the cutoff leakage rate is not limited to "air", and may be any type of gas that is in the single gas phase in the standard state, including "nitrogen" and the like.

**REFERENCE SIGNS LIST**

1: air conditioner (refrigerant cycle apparatus)
3aa, 3bb, 3cc, 3dd: first portion (utilization-side circuit)
10: refrigerant circuit
19: control unit
68a, 68b, 68c, 68d: gas-side cutoff valve
71a, 71b, 71c, 71d: liquid-side cutoff valve
79a, 79b, 79c, 79d: detection unit (refrigerant leakage detection unit)
SP: predetermined space

**Claims**

1. A refrigerant cycle apparatus (1) that circulates a flammable refrigerant in a refrigerant circuit (10), the refrigerant cycle apparatus (1) comprising:

   a gas-side cutoff valve (68a, 68b, 68c, 68d) and a liquid-side cutoff valve (71a, 71b, 71c, 71d) that are provided on opposite sides of a first portion (3aa, 3bb, 3cc, 3dd) of the refrigerant circuit;
   a detection unit (79a, 79b, 79c, 79d) that detects refrigerant leakage from the first portion into a predetermined space (SP); and
   a control unit (19) that brings the gas-side cutoff valve and the liquid-side cutoff valve into a cutoff state when the detection unit detects the refrigerant leakage from the first portion into the predetermined space,
   wherein cutoff leakage rates at the gas-side cutoff valve and the liquid-side cutoff valve are leakage rates of gas that is in a single gas phase in a standard state when a differential pressure between upstream and downstream of each of the gas-side cutoff valve and the liquid-side cutoff valve in the cutoff state is a predetermined pressure,
   **characterized in that**
   the cutoff leakage rate at the gas-side cutoff valve is higher than the cutoff leakage rate at the liquid-side cutoff valve.

2. The refrigerant cycle apparatus according to claim 1, wherein the cutoff leakage rate is a leakage rate of air when a temperature is 20°C and the predetermined pressure is 1 MPa,

   the cutoff leakage rate at the gas-side cutoff valve is higher than $300 \times R$ ($cm^3$/min), and
   the cutoff leakage rate at the liquid-side cutoff valve is lower than $300 \times R$ ($cm^3$/min), wherein $R = (\rho_{md} \times V_{md} \times A_d)/(C_r \times (2 \times \Delta P_r/\rho_{1r})^{0.5} \times A_v \times \rho_{1rl} + A_v \times (2/(\lambda + 1))^{((\lambda + 1)/2 (\lambda -1))} \times (\lambda \times P_{1r} \times \rho_{1rg})^{0.5})$, in which $A_v$ is a valve clearance sectional area ($m^2$) of each of the gas-side cutoff valve and the liquid-side cutoff valve in the cutoff state,
   $\rho_{1rl}$ is a density (kg/$m^3$) of the refrigerant in a liquid phase,
   $\rho_{1rg}$ is a density (kg/$m^3$) of the refrigerant in a gas phase,
   $P_{1r}$ is a pressure (MPa) of the refrigerant located upstream of each of the gas-side cutoff valve and the liquid-side cutoff valve,
   $\lambda$ is a specific heat ratio of the refrigerant,
   $\rho_{md}$ is a density (kg/$m^3$) of a gaseous mixture of the air and the refrigerant passing through a clearance of a door partitioning into inside and outside the predetermined space,
   $V_{md}$ is a velocity (m/s) of the gaseous mixture of the air and the refrigerant passing through the clearance of the door partitioning into inside and outside the predetermined space,
   $A_d$ is an area ($m^2$) of the clearance of the door partitioning into inside and outside the predetermined space,

$\Delta P_r$ is a pressure difference (Pa) between an inside and an outside of a hole where the refrigerant leaks, and $C_r$ is a flow rate coefficient of the refrigerant when the refrigerant in the liquid phase passes through the hole where the refrigerant leaks, and is 0.6.

3. The refrigerant cycle apparatus according to claim 1, wherein the cutoff leakage rate at the gas-side cutoff valve is 1.0 times to 2.7 times or less of $300 \times R$ ($cm^3$/min), and the cutoff leakage rate at the liquid-side cutoff valve is 0.94 times or less of $300 \times R$ ($cm^3$/min).

4. The refrigerant cycle apparatus according to claim 1, wherein the cutoff leakage rate at the gas-side cutoff valve is in a range of 1.6 times to 2.7 times of $300 \times R$ ($cm^3$/min), and the cutoff leakage rate at the liquid-side cutoff valve is in a range of 0.37 times to 0.94 times of $300 \times R$ ($cm^3$/min).

5. The refrigerant cycle apparatus according to any one of claims 2 to 4, wherein R = 1.

6. The refrigerant cycle apparatus according to any one of claims 2 to 4, wherein a tolerable average concentration is an average concentration of the refrigerant leaking into the predetermined space, and is a concentration in a range where it is recognized that there is no risk of combustion of the refrigerant leaking into the predetermined space, a leakage height is a position of the first portion in the predetermined space when the refrigerant leaks into the predetermined space.

7. The refrigerant cycle apparatus according to any one of claims 1 to 6 wherein the flammable refrigerant is a mildly flammable refrigerant determined as "Class 2L" according to ANSI/ASHRAE Standard 34-2013, a less flammable refrigerant determined as "Class 2" according to ANSI/ASHRAE Standard 34-2013, or a highly flammable refrigerant determined as "Class 3" according to ANSI/ASHRAE Standard 34-2013.

**Patentansprüche**

1. Kältemittelkreislaufvorrichtung (1), die ein entflammbares Kältemittel in einem Kältemittelkreislauf (10) zirkulieren lässt, wobei die Kältemittelkreislaufvorrichtung (1) umfasst:

   ein gasseitiges Absperrventil (68a, 68b, 68c, 68d) und ein flüssigkeitsseitiges Absperrventil (71a, 71b, 71c, 71d), die auf gegenüberliegenden Seiten eines ersten Abschnitts (3aa, 3bb, 3cc, 3dd) des Kältemittelkreislaufs vorgesehen sind;
   eine Detektionseinheit (79a, 79b, 79c, 79d), die eine Kältemittelleckage aus dem ersten Abschnitt in einen vorbestimmten Raum (SP) detektiert; und
   eine Steuereinheit (19), die das gasseitige Absperrventil und das flüssigkeitsseitige Absperrventil in einen Sperrzustand bringt, wenn die Detektionseinheit die Kältemittelleckage aus dem ersten Abschnitt in den vorbestimmten Raum detektiert,
   wobei Sperrleckageraten an dem gasseitigen Absperrventil und dem flüssigkeitsseitigen Absperrventil Leckageraten von Gas sind, das sich in einem Standardzustand in einer einzelnen Gasphase befindet, wenn ein Differenzdruck zwischen stromaufwärts und stromabwärts von jedem von dem gasseitigen Absperrventil und dem flüssigkeitsseitigen Absperrventil in dem Sperrzustand ein vorbestimmter Druck ist,
   **dadurch gekennzeichnet, dass**
   die Sperrleckagerate an dem gasseitigen Absperrventil höher ist als die Sperrleckagerate an dem flüssigkeitsseitigen Absperrventil.

2. Kältemittelkreislaufvorrichtung nach Anspruch 1, wobei die Sperrleckagerate eine Leckagerate von Luft ist, wenn eine Temperatur 20 °C beträgt und der vorbestimmte Druck 1 MPa beträgt,

   die Sperrleckagerate an dem gasseitigen Absperrventil höher als $300 \times R$ ($cm^3$/Min) ist, und
   die Sperrleckagerate an dem flüssigkeitsseitigen Absperrventil kleiner als $300 \times R$ ($cm^3$ IMin) ist,
   wobei $R = (p_{md} \times V_{md} \times A_d)/(C_r \times (2 \times \Delta P_r/p_{1r})^{0,5} \times A_v \times p_{1rl} + A_v \times (2/(\lambda+1))^{((\lambda+1)/2(\lambda-1))} \times (\lambda \times P_{1r} \times p_{1rg})^{0,5})$,
   wobei $A_v$ eine Ventilöffnungsquerschnittsfläche ($m^2$) von jedem von dem gasseitigen Absperrventil und dem flüssigkeitsseitigen Absperrventil in dem Sperrzustand ist,
   $\rho_{1rl}$ eine Dichte (kg/$m^3$) des Kältemittels in einer Flüssigphase ist,
   $\rho_{1rg}$ eine Dichte (kg/$m^3$) des Kältemittels in einer Gasphase ist,
   $P_{1r}$ ein Druck (MPa) des Kältemittels ist, das sich stromaufwärts von jedem von dem gasseitigen Absperrventil und dem flüssigkeitsseitigen Absperrventil befindet,

$\lambda$ ein spezifisches Wärmeverhältnis des Kältemittels ist,

$p_{md}$ eine Dichte (kg/m$^3$) eines gasförmigen Gemischs aus der Luft und dem Kältemittel ist, das durch eine Öffnung einer Tür hindurchgeht, die den vorbestimmten Raum in einen Innen- und Außenbereich trennt,

$V_{md}$ eine Geschwindigkeit (m/s) des gasförmigen Gemischs aus der Luft und dem Kältemittel ist, das durch die Öffnung der Tür hindurchgeht, die den vorbestimmten Raum in einen Innen- und Außenbereich trennt,

$A_d$ eine Fläche (m$^2$) der Öffnung der Tür ist, die den vorbestimmten Raum in einen Innen- und Außenbereich trennt,

$\Delta P_r$ eine Druckdifferenz (Pa) zwischen einer Innenseite und einer Außenseite eines Lochs ist, an dem die Kältemittelleckage stattfindet, und

$C_r$ ein Durchflussratenkoeffizient des Kältemittels ist, wenn das Kältemittel in der Flüssigphase durch das Loch, an dem die Kältemittelleckage stattfindet, hindurchgeht, und 0,6 beträgt

3. Kältemittelkreislaufvorrichtung nach Anspruch 1, wobei die Sperrleckagerate an dem gasseitigen Absperrventil das 1,0- bis 2,7-Fache oder weniger von 300 $\times$ R (cm$^3$/Min) beträgt, und die Sperrleckagerate an dem flüssigkeitsseitigen Absperrventil das 0,94-Fache oder weniger von 300 $\times$ R (cm$^3$/Min) beträgt.

4. Kältemittelkreislaufvorrichtung nach Anspruch 1, wobei die Sperrleckagerate an dem gasseitigen Absperrventil in einem Bereich des 1,6-Fachen bis 2,7-Fachen von 300 $\times$ R (cm$^3$/Min) liegt und die Sperrleckagerate an dem flüssigkeitsseitigen Absperrventil in einem Bereich des 0,37-Fachen bis 0,94-Fachen von 300 $\times$ R (cm$^3$/Min) liegt.

5. Kältemittelkreislaufvorrichtung nach einem der Ansprüche 2 bis 4, wobei R = 1 ist.

6. Kältemittelkreislaufvorrichtung nach einem der Ansprüche 2 bis 4, wobei eine tolerierbare Durchschnittskonzentration eine Durchschnittskonzentration des in den vorbestimmten Raum leckenden Kältemittels ist und eine Konzentration in einem Bereich ist, in dem anerkannt wird, dass kein Verbrennungsrisiko des in den vorbestimmten Raum leckenden Kältemittels besteht,
eine Leckagehöhe eine Position des ersten Abschnitts in dem vorbestimmten Raum ist, wenn das Kältemittel in den vorbestimmten Raum leckt.

7. Kältemittelkreislaufvorrichtung nach einem der Ansprüche 1 bis 6, wobei das
entflammbare Kältemittel ein leicht entflammbares Kältemittel, bestimmt als "Klasse 2L" nach ANSI/ASHRAE-Standard 34-2013, ein weniger entflammbares Kältemittel, bestimmt als "Klasse 2" nach ANSI/ASHRAE-Standard 34-2013, oder ein hochentflammbares Kältemittel, bestimmt als "Klasse 3" nach ANSI/ASHRAE-Standard 34-2013, ist.

## Revendications

1. Dispositif (1) à cycle frigorifique qui fait circuler un fluide frigorigène inflammable dans un circuit frigorifique (10), le dispositif (1) à cycle frigorifique comprenant :

une vanne de coupure côté gaz (68a, 68b, 68c, 68d) et une vanne de coupure côté liquide (71a, 71b, 71c, 71d) qui sont prévues sur des côtés opposés d'une première partie (3aa, 3bb, 3cc, 3dd) du circuit frigorifique ;
une unité de détection (79a, 79b, 79c, 79d) qui détecte une fuite de fluide frigorigène depuis la première partie jusque dans un espace prédéterminé (SP) ; et
une unité de commande (19) qui fait passer la vanne de coupure côté gaz et la vanne de coupure côté liquide dans un état de coupure lorsque l'unité de détection détecte la fuite de fluide frigorigène depuis la première partie jusque dans l'espace prédéterminé,
dans lequel des débits de fuite de coupure au niveau de la vanne de coupure côté gaz et la vanne de coupure côté liquide sont des débits de fuite de gaz qui se trouve dans une phase gazeuse simple dans un état standard lorsqu'une pression différentielle entre l'amont et l'aval de chacune des vanne de coupure côté gaz et vanne de coupure côté liquide dans l'état de coupure est une pression prédéterminée,
**caractérisé en ce que**
le débit de fuite de coupure au niveau de la vanne de coupure côté gaz est plus élevé que le débit de fuite de coupure au niveau de la vanne de coupure côté liquide.

2. Dispositif à cycle frigorifique selon la revendication 1, dans lequel le débit de fuite de coupure est un débit de fuite d'air lorsque la température est de 20°C et la pression prédéterminée est de 1 MPa,

le débit de fuite de coupure au niveau de la vanne de coupure côté gaz est supérieur à $300 \times R$ ($cm^3$/min), et
le débit de fuite de coupure au niveau de la vanne de coupure côté liquide est inférieur à $300 \times R$ ($cm^3$/min),
dans lequel

$$R = (\rho_{md} \times$$

$$V_{md} \times A_d)/(C_r \times (2 \times \Delta P_r/\rho_{1r})^{0.5} \times A_v \times \rho_{1rl} + A_v \times (2/(\lambda + 1))^{((\lambda + 1)/2 (\lambda - 1))} \times (\lambda \times P_{1r} \times \rho_{1rg})^{0.5}),$$

où $A_v$ est une aire de section de dégagement de vanne ($m^2$) de chacune des vanne de coupure côté gaz et vanne de coupure côté liquide dans l'état de coupure,
$\rho_{1rl}$ est une densité ($kg/m^3$) du fluide frigorigène en phase liquide,
$\rho_{1rg}$ est une densité ($kg/m^3$) du fluide frigorigène en phase gazeuse,
$P_{1r}$ est une pression (MPa) du fluide frigorigène situé en amont de chacune des vanne de coupure côté gaz et vanne de coupure côté liquide,
$\lambda$ est un rapport de chaleur spécifique du fluide frigorigène,
$\rho_{md}$ est une densité ($kg/m^3$) d'un mélange gazeux de l'air et du fluide frigorigène passant à travers un dégagement d'un cloisonnement de porte à l'intérieur et l'extérieur de l'espace prédéterminé,
$V_{md}$ est une vitesse (m/s) du mélange gazeux de l'air et du fluide frigorigène passant à travers le dégagement du cloisonnement de porte à l'intérieur et l'extérieur de l'espace prédéterminé,
$A_d$ est une aire ($m^2$) du dégagement du cloisonnement de porte à l'intérieur et l'extérieur de l'espace prédéterminé,
$\Delta P_r$ est une différence de pression (Pa) entre l'intérieur et l'extérieur d'un orifice où le fluide frigorigène fuit, et
$C_r$ est un coefficient de débit du fluide frigorigène quand le fluide frigorigène en phase liquide passe à travers l'orifice où le fluide frigorigène fuit, et est de 0,6.

3. Dispositif à cycle frigorifique selon la revendication 1, dans lequel le débit de fuite de coupure au niveau de la vanne de coupure côté gaz est 1,0 fois à 2,7 fois ou moins de $300 \times R$ ($cm^3$/min), et le débit de fuite de coupure au niveau de la vanne de coupure côté liquide est 0,94 fois ou moins de $300 \times R$ ($cm^3$/min).

4. Dispositif à cycle frigorifique selon la revendication 1, dans lequel le débit de fuite de coupure au niveau de la vanne de coupure côté gaz se trouve dans la plage comprise de 1,6 fois à 2,7 fois $300 \times R$ ($cm^3$/min), et le débit de fuite de coupure au niveau de la vanne de coupure côté liquide se trouve dans la plage comprise de 0,37 fois à 0,94 fois $300 \times R$ ($cm^3$/min).

5. Dispositif à cycle frigorifique selon l'une quelconque des revendications 2 à 4, dans lequel R = 1.

6. Dispositif à cycle frigorifique selon l'une quelconque des revendications 2 à 4, dans lequel une concentration moyenne tolérable est une concentration moyenne du fluide frigorigène qui fuit jusque dans l'espace prédéterminé, et est une concentration dans la plage où il est reconnu qu'il n'y a pas de risque de combustion du fluide frigorigène qui fuit jusque dans l'espace prédéterminé,
une hauteur de fuite est une position de la première partie dans l'espace prédéterminé lorsque le fluide frigorigène fuit jusque dans l'espace prédéterminé.

7. Dispositif à cycle frigorifique selon l'une quelconque des revendications 1 à 6, dans lequel le fluide frigorigène inflammable est un fluide frigorigène légèrement inflammable déterminé comme « Classe 2L » selon la norme ANSI/ASHRAE 34-2013, un fluide frigorigène moins inflammable déterminé comme « Classe 2 » selon la norme ANSI/ASHRAE 34-2013, ou un fluide frigorigène hautement inflammable déterminé comme « Classe 3 » selon la norme ANSI/ASHRAE 34-2013.

EP 3 985 331 B1

FIG. 1

FIG. 2

EP 3 985 331 B1

FIG. 3

EP 3 985 331 B1

**19**

```
┌─────────────────────────┐
│   HEAT SOURCE-SIDE      │
92 │   CONTROL UNIT         │
└─────────────────────────┘
              │
95            │
              │
┌─────────────────────────┐        68a,68b,68c,68d
│                         │        71a,71b,71c,71d
94a,94b,94c,94d │   RELAY-SIDE      │────┌──────────────────┐
│   CONTROL UNIT    │    │  CUTOFF VALVE    │
└─────────────────────────┘    └──────────────────┘
              │
96            │
              │
┌─────────────────────────┐        79a,79b,79c,79d
│   UTILIZATION-SIDE │────┌──────────────────────┐
93a,93b,93c,93d │   CONTROL UNIT    │    │  REFRIGERANT LEAKAGE │
│                   │    │  DETECTION UNIT      │
└─────────────────────────┘    └──────────────────────┘
                        97a,97b,97c,97d
```

# FIG. 4

START

S1 — IS THERE REFRIGERANT LEAKAGE? — NO

YES

S2 — ISSUE ALARM IN UTILIZATION-SIDE UNIT HAVING REFRIGERANT LEAKAGE

S3 — IS COOLING OPERATION BEING PERFORMED? — YES

NO

S4 — SWITCH TO COOLING OPERATION

S5 — REDUCE OPENING DEGREE OF HEAT SOURCE-SIDE EXPANSION VALVE TO LOWER PRESSURE OF REFRIGERANT FLOWING TO UTILIZATION-SIDE UNITS THAT SWITCH TO COOLING OPERATION, AND MAKE OPENING DEGREE OF REFRIGERANT RETURN EXPANSION VALVE LARGER

S6 — HAS PREDETERMINED TIME ELAPSED OR HAS PRESSURE OF REFRIGERANT BEEN LOWERED TO NEAR ATMOSPHERIC PRESSURE? — NO

YES

S7 — CLOSE CUTOFF VALVES LOCATED UPSTREAM AND DOWNSTREAM OF UTILIZATION-SIDE UNIT HAVING REFRIGERANT LEAKAGE, SEPARATE UTILIZATION-SIDE UNIT HAVING REFRIGERANT LEAKAGE, AND STOP ALL UNITS OF AIR CONDITIONER

END

FIG. 5

REFRIGERANT LEAKAGE FROM SHUTOFF
VALVE (VALVE OF 300 cc/min AND 1 MPa)

FIG. 6

RATIO BETWEEN LIQUID LEAKAGE VELOCITY AND GAS LEAKAGE VELOCITY

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2631571 A1